# EUROPEAN PATENT APPLICATION

(11) **EP 4 841 959 A1**
(43) Date of publication of application: **18.11.2026**
(21) Application number: 25738472.7
(22) Date of filing: 08.01.2025
(51) Int. Cl.: H04L 67/00

(54) **DATA PROCESSING METHOD, SERVER, AND TERMINAL DEVICE**

(30) Priority: 08.01.2024 CN 202410030592; 23.05.2024 CN 202410649045; 20.08.2024 CN 202411153163
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WEN, Luwei, Ningbo, Zhejiang 315899 (CN)
(74) Representative: Boult Wade Tennant LLP
(86) International application number: PCT/CN2025/071337
(87) International publication number: WO 2025/148943

(57) **Abstract**

The present application provides a data processing method, a server, and a terminal device, the method includes: by creating a data string set for old file data of a target application, a retained data set and a newly added data set of new file data of the target application compared to the old file data can be obtained according to the data string set and a preset data string length threshold; a patch file for the target application is generated according to relevant information of at least one piece of retained data in the retained data set and position information of at least one piece of newly added data in the newly added data set in the new file data to perform data update for the target application. In the above method, by setting a data string length threshold for a length of the retained data, a quantity of the retained data and a size of the newly added data can be reduced to compress a size of the patch file, a traffic of the terminal device downloading the patch file is reduced and an upgrade time of the target application is shortened.

## Description

The present application claims priority to Chinese Patent Application No. 202410030592.5, filed to China National Intellectual Property Administration on January 08, 2024 and entitled "FIRMWARE UPGRADE PROCESSING METHOD AND APPARATUS, DEVICE, AND STORAGE MEDIUM", which is hereby incorporated by reference in its entirety.

The present application claims priority to Chinese Patent Application No. 202410649045.5, filed to China National Intellectual Property Administration on May 23, 2024 and entitled "METHOD AND APPARATUS FOR FILE DOWNLOADING, AND VEHICLE", which is hereby incorporated by reference in its entirety.

The present application claims priority to Chinese Patent Application No. 202411153163.3, filed to China National Intellectual Property Administration on August 20, 2024 and entitled "DATA PROCESSING METHOD, SERVER, AND TERMINAL DEVICE", which is hereby incorporated by reference in its entirety.

### TECHNICAL FIELD

The present application relates to the field of intelligent terminal technology, and in particular, to a data processing method, a server, and a terminal device.

### BACKGROUND

Differential restoration technology is applied in a software upgrade scenario of an electronic device. Differential restoration technology includes a differential algorithm and a restoration algorithm. A server can obtain difference data of a software without upgrade and after upgrade through the differential algorithm. A client terminal can upgrade a software that has not been upgraded by the restoration algorithm and the difference data.

When executing the differential algorithm, a large quantity of differential data is usually obtained, resulting in a large quantity of data in patch files used for software upgrade. This will increase a traffic for downloading differential data on the client terminal, prolong a download time and increase an occupancy of a storage space, which is not conducive to the client terminal upgrading the software that has not been upgraded.

Therefore, how to minimize the size of the patch file as much as possible through the differential algorithm is an urgent problem to be solved at present.

### SUMMARY

The present application provides a data processing method, a server, and a terminal device. By setting a data string length threshold for a length of retained data, a quantity of retained data and a size of newly added data can be reduced to compress a size of a patch file, which can reduce a traffic of a terminal device downloading the patch file and shorten an upgrade time of a target application.

A first aspect of the present application provides a data processing method applied to a server, the method includes: receiving a first file update request from a first device, where the first file update request includes first new file data of a first target application; acquiring first old file data corresponding to the first new file data, and a first data string set, where the first data string set is a set of data strings of different lengths created based on the first old file data and the first new file data; determining a retained data set and a newly added data set of the first new file data compared to the first old file data according to the first data string set and a preset data string length threshold, where the retained data set includes at least one piece of retained data, the newly added data set includes at least one piece of newly added data, a data length of each piece of retained data is greater than the data string length threshold; and generating a patch file of the first new file data according to a data length of the at least one piece of retained data, position information of the at least one piece of newly added data in the first new file data, and position information of the at least one piece of retained data in the first new file data and the first old file data respectively, where the patch file is used to perform data update for the first target application.

In some embodiments of the first aspect, the determining the retained data set and the newly added data set of the first new file data compared to the first old file data according to the first data string set and the preset data string length threshold includes: starting from a first byte of the first new file data, searching for a longest data string beginning with the first byte in the first data string set; determining whether to treat the longest data string as one piece of retained data by comparing a size relationship between a length of the longest data string and the data string length threshold; obtaining the retained data set after traversing all bytes of the first new file data; and determining the newly added data set according to a position of the retained data in the retained data set in the first new file data.

In some embodiments of the first aspect, the determining whether to treat the longest data string as one piece of retained data by comparing the size relationship between the length of the longest data string and the data string length threshold includes: if the length of the longest data string is greater than the data string length threshold, determining to treat the longest data string as one piece of retained data, and starting from a target byte of the first new file data, searching for whether there is a longest data string beginning with the target byte in the first data string set, where the target byte is a byte determined by adding a length of the longest data string beginning with the first byte to the first byte; and if the length of the longest data string is less than or equal to the data string length threshold, starting from a next byte of the first byte, continuing to search for whether there is a longest data string beginning with the next byte in the first data string set.

In some embodiments of the first aspect, performing data splitting for the first new file data and the first old file data respectively according to a preset data volume threshold to obtain N pairs of new-old file data blocks, where N is a positive integer greater than 1 and less than or equal to M, and M is a maximum value of processing threads executed in parallel; creating N first processing threads, where the N first processing threads correspond one-to-one with the N pairs of new-old file data blocks; executing data comparison on the N pairs of new-old file data blocks in parallel by the N first processing threads to obtain patch files of the N pairs of new-old file data blocks; and generating the patch file of the first new file data according to the patch files of the N pairs of new-old file data blocks.

In some embodiments of the first aspect, the method further includes: initializing a preset parameter by calling a preset algorithm library through a first application thread of the first target application, where the preset parameter includes the data volume threshold and M; and creating a first management thread by the first application thread according to the first file update request; the performing data splitting for the first new file data and the first old file data respectively according to the preset data volume threshold to obtain the N pairs of new-old file data blocks includes: executing, by the first management thread, the step of performing data splitting for the first new file data and the first old file data respectively according to the preset data volume threshold to obtain the N pairs of new-old file data blocks; the creating the N first processing threads includes: creating the N first processing threads by the first management thread; and the generating the patch file of the new file data according to the patch files of the N pairs of new-old file data blocks includes: executing, by the first management thread, the step of generating the patch file of the first new file data according to the patch files of the N pairs of new-old file data blocks.

In some embodiments of the first aspect, the first application thread is further used to write information of the N first processing threads corresponding to the first file update request in a first storage space; the first management thread is further used to delete the information of the N first processing threads after generating the patch file of the first new file data; when the first application thread writes data in the first storage space, the first management thread is prohibited from deleting data in the first storage space.

In some embodiments of the first aspect, the first processing thread is used to write a processing state and/or a processing progress of the first processing thread in a second storage space, and the first management thread is used to read the processing state and/or the processing progress of the first processing thread from the second storage space; when the first processing thread writes data in the second storage space, the first management thread is prohibited from reading data in the second storage space.

In some embodiments of the first aspect, if the first file update request includes the first new file data and second new file data of the first target application, both the first new file data and the second new file data correspond to the first old file data; the creating the first management thread by the first application thread includes: creating two first management threads by the first application; and when one first management thread of the two first management threads reads the first old file data, prohibiting the other first management thread of the two first management threads from reading the first old file data.

In some embodiments of the first aspect, receiving a second file update request from the first device while receiving the first file update request, where the second file update request includes a third new file data of a second target application; creating a second application thread of the second target application according to the second file update request, where the second application thread is used to initialize the preset parameter by calling the preset algorithm library; creating a second management thread by the second application thread; and when the first application thread calls the preset algorithm library, prohibiting the second application thread from calling the preset algorithm library.

In some embodiments of the first aspect, the method further includes: receiving an upgrade request from a second device, where the upgrade request is used to request an upgrade for the first target application; in response to the upgrade request, acquiring a patch file of the first target application; and sending an upgrade response to the second device, where the upgrade response includes the patch file of the first target application.

A second aspect of the present application further provides a data processing method applied to a terminal device, the method includes: receiving an upgrade response from a server, where the upgrade response includes a patch file of a first target application; reading at least one piece of retained data from first old file data according to position information of the at least one piece of retained data of a patch file in the first old file data and a data length of the at least one piece of retained data; according to an interval length between adjacent retained data in the at least one piece of retained data, reading newly added data of the same length as the interval length and position information of the at least one piece of retained data in first new file data from the patch file; and generating the first new file data of the first target application according to the newly added data, the position information of the at least one piece of retained data in the first new file data, and the at least one piece of retained data block.

In some embodiments of the second aspect, after the receiving the upgrade response from the server, the method further includes: in response to receiving an upgrade task, creating at least one upgrade process corresponding to the upgrade task, where the upgrade process corresponds to a firmware to be upgraded; acquiring occupancy of at least one type of resource of the firmware to be upgraded and a first threshold corresponding to the at least one type of resource; and suspending the upgrade process corresponding to the firmware to be upgraded if the occupancy of the at least one type of resource is greater than the corresponding first threshold.

In some embodiments of the second aspect, after the suspending the upgrade process corresponding to the firmware to be upgraded if the occupancy of the at least one type of resource is greater than the corresponding first threshold, the method further includes: continuing the upgrade process corresponding to the firmware to be upgraded if occupancy of all types of resources of the firmware to be upgraded is less than a corresponding second threshold.

In some embodiments of the second aspect, after the acquiring the occupancy of the at least one type of resource of the firmware to be upgraded and the first threshold corresponding to the at least one type of resource, the method further includes: acquiring a first process running in the firmware to be upgraded if the occupancy of the at least one type of resource of the firmware to be upgraded is greater than the corresponding first threshold; determining a priority of each first process; determining a process to be terminated according to the priority of each first process; and terminating the process to be terminated.

In some embodiments of the second aspect, the determining the priority of each first process includes: acquiring final response time of each first process, current time and a preset priority score corresponding to each first process; calculating a time difference between final response time corresponding to a target first process and the current time, where the target first process is any first process; determining a minimum value and a maximum value of the preset priority score corresponding to each first process as input parameters; writing the input parameters into a preset formula template to obtain a priority calculation formula; and inputting the preset priority score corresponding to the target first process and the time difference into the priority calculation formula to obtain a priority corresponding to the target first process.

In some embodiments of the second aspect, after the in response to receiving the upgrade task, creating the at least one upgrade process corresponding to the upgrade task, the method further includes: acquiring a second process running in the firmware to be upgraded; and if the second process corresponding to the firmware to be upgraded includes a target process corresponding to the firmware to be upgraded, suspending the upgrade process corresponding to the firmware to be upgraded.

In some embodiments of the second aspect, after the suspending the upgrade process corresponding to the firmware to be upgraded, the method further includes: if the target process is in a stopped state, continuing the upgrade process corresponding to the firmware to be upgraded.

In some embodiments of the second aspect, after the in response to receiving the upgrade task, creating the at least one upgrade process corresponding to the upgrade task, the method further includes: acquiring running applications; if the running applications include a target application, determining a firmware to be suspended corresponding to the target application; and suspending an upgrade process corresponding to the firmware to be suspended.

In some embodiments of the second aspect, after the receiving the upgrade response from the server, the method further includes: setting a priority usage rule of multiple downloaders; in response to a download instruction for downloading a target file, selecting at least one target downloader from the multiple downloaders according to a preset identifier of the target file and the priority usage rule of multiple downloaders; based on a network bandwidth of each node in a distributed network where the multiple downloaders are located, determining an expected download bandwidth in the at least one target downloader; and downloading the target file by the at least one target downloader using the expected download bandwidth.

In some embodiments of the second aspect, the multiple downloaders include a first downloader, a second downloader and a third downloader; setting the priority usage rule of the multiple downloaders include: a first priority usage rule: using the first downloader; a second priority usage rule: using both the second downloader and the third downloader simultaneously; a third priority usage rule: only using the second downloader; and a fourth priority usage rule: only using the third downloader.

In some embodiments of the second aspect, the determining the expected download bandwidth in the at least one target downloader includes: determining a communication network bandwidth for a communication network in an in-vehicle network accessed by a vehicle, a first Ethernet bandwidth for an Ethernet between the first downloader and a gateway, a second Ethernet bandwidth for the Ethernet between the gateway and the second downloader, and a third Ethernet bandwidth for the Ethernet between the gateway and the third downloader; when the first downloader is selected as the target downloader, determining the communication network bandwidth as a first expected download bandwidth; when the second downloader is selected as the target downloader, determining the smallest of the communication network bandwidth, the first Ethernet bandwidth, and the second Ethernet bandwidth as a second expected download bandwidth; and when the third downloader is selected as the target downloader, determining the smallest of the communication network bandwidth, the first Ethernet bandwidth, and the third Ethernet bandwidth as a third expected download bandwidth; where the first downloader includes a telematics box downloader, the second downloader includes a cockpit domain controller downloader, and the third downloader includes a driving domain centers downloader.

In some embodiments of the second aspect, the downloading the target file by the at least one target downloader using the expected download bandwidth includes: if the target file is able to be downloaded using the first downloader, determining the first downloader as the target downloader and downloading the target file using the first expected download bandwidth; and if the target file is unable to be downloaded using the first downloader but is able to be downloaded using the second downloader and the third downloader, and the third Ethernet bandwidth is determined as the third expected download bandwidth, determining the second downloader and the third downloader as the target downloader, determining a difference value between a smaller one of the communication network bandwidth and the first Ethernet bandwidth with the second expected download bandwidth as an auxiliary download bandwidth; selecting the second downloader to download the target file using the second expected download bandwidth, and at the same time, selecting the third downloader to download the target file using the auxiliary download bandwidth.

In some embodiments of the second aspect, the downloading the target file by the at least one target downloader using the expected download bandwidth further includes: if the target file is unable to be downloaded using the first downloader and the third downloader but is able to be downloaded using the second downloader, or if the target file is unable to be downloaded using the first downloader but is able to be downloaded using the second downloader and the third downloader, and either the communication network bandwidth or the first Ethernet bandwidth is determined as the third expected download bandwidth, determining the second downloader as the target downloader, and downloading the target file using the second expected download bandwidth.

In some embodiments of the second aspect, the downloading the target file by the at least one target downloader using the expected download bandwidth further includes: if the target file is unable to be downloaded using the first downloader and the second downloader but is able to be downloaded using the third downloader, determining the third downloader as the target downloader, and downloading the target file using the third expected download bandwidth.

In some embodiments of the second aspect, the downloading the target file by the at least one target downloader using the expected download bandwidth further includes: periodically determining the first expected download bandwidth, the second expected download bandwidth, the third expected download bandwidth, and a download rate of the target file according to a preset time period; or, dynamically determining the first expected download bandwidth, the second expected download bandwidth, the third expected download bandwidth, and the download rate of the target file according to a current connection state of the in-vehicle network.

In some embodiments of the second aspect, after the downloading the target file by the at least one target downloader using the expected download bandwidth, the method further includes: if a connection of the in-vehicle network is disconnected, controlling the multiple downloaders to suspend a download work; and if the connection of the in-vehicle network is restored, determining an updated expected download bandwidth of the at least one target downloader, and downloading the target file by the target downloader using the updated expected download bandwidth.

A third aspect of the present application further provides a data processing apparatus applied to a server, the apparatus includes: a request receiving module, configured to receive a first file update request from a first device, where the first file update request includes first new file data of a first target application; a data acquisition module, configured to acquire first old file data corresponding to the first new file data, and a first data string set, where the first data string set is a set of data strings of different lengths created based on the first old file data and the first new file data; a data determining module, configured to determine a retained data set and a newly added data set of the first new file data compared to the first old file data according to the first data string set and a preset data string length threshold, where the retained data set includes at least one piece of retained data, the newly added data set includes at least one piece of newly added data, a data length of each piece of retained data is greater than the data string length threshold; and a file generating module, configured to generate a patch file of the first new file data according to a data length of the at least one piece of retained data, position information of the at least one piece of newly added data in the first new file data, and position information of the at least one piece of retained data in the first new file data and the first old file data respectively, where the patch file is used to perform data update for the first target application.

A fourth aspect of the present application further provides a data processing apparatus applied to a terminal device, the apparatus includes: a response receiving module, configured to receive an upgrade response from a server, where the upgrade response includes a patch file of a first target application; a retained data reading module, configured to read at least one piece of retained data from first old file data according to position information of the at least one piece of retained data of a patch file in the first old file data and a data length of the at least one piece of retained data; a newly added data reading module, configured to read newly added data of the same length as the interval length and position information of the at least one piece of retained data in first new file data from the patch file according to an interval length between adjacent retained data in the at least one piece of retained data; a file data generating module, configured to generate the first new file data of the first target application according to the newly added data, the position information of the at least one piece of retained data in the first new file data, and the at least one piece of retained data block.

A fifth aspect of the present application further provides a vehicle, including the data processing apparatus as described in the fourth aspect.

A sixth aspect of the present application further provides a server, including: a processor and a memory; where the memory is coupled with the processor, the memory is configured to store computer program codes, and the processor calls the computer program codes to enable the server to execute the method described in the first aspect.

A seventh aspect of the present application further provides a terminal device, including: a processor and a memory; where the memory is coupled with the processor, the memory is configured to store computer program codes, and the processor calls the computer program codes to enable the terminal device to execute the method described in the second aspect.

An eighth aspect of the present application further provides a computer-readable storage medium, where the computer-readable storage medium stores computer execution instructions, when the computer execution instructions are executed by a processor, the computer execution instructions are used to implement the data processing method described in the first aspect or the second aspect.

The present application provides a data processing method, a server, and a terminal device, the method includes: by creating a data string set for old file data of a target application, a retained data set and a newly added data set of new file data of the target application compared to the old file data can be obtained according to the data string set and a preset data string length threshold; a patch file for the target application is generated according to relevant information of at least one piece of retained data in the retained data set and position information of at least one piece of newly added data in the newly added data set in the new file data to perform data update for the target application. In the above method, by setting a data string length threshold for a length of the retained data, a quantity of the retained data and a size of the newly added data can be reduced to compress a size of the patch file, a traffic of the terminal device downloading the patch file is reduced and an upgrade time of the target application is shortened.

### BRIEF DESCRIPTION OF DRAWINGS

FIG. 1 is a schematic diagram of an application scenario of a data processing method provided by an embodiment of the present application.
FIG. 2 is a flow diagram of a data processing method provided by an embodiment of the present application.
FIG. 3 is a schematic diagram of another application scenario of a data processing method provided by an embodiment of the present application.
FIG. 4 is another flow diagram of a data processing method provided by an embodiment of the present application.
FIG. 5 is a schematic diagram of a further application scenario of a data processing method provided by an embodiment of the present application.
FIG. 6 is a further flow diagram of a data processing method provided by an embodiment of the present application.
FIG. 7 is a schematic diagram of a multi-threaded scenario of a data processing method provided by an embodiment of the present application.
FIG. 8 is a schematic diagram of an application scenario of a data processing method provided by another embodiment of the present application.
FIG. 9 is a flow diagram of a data processing method provided by another embodiment of the present application.
FIG. 10 is another flow diagram of a data processing method provided by another embodiment of the present application.
FIG. 11 is a schematic diagram of another application scenario of a data processing method provided by a further embodiment of the present application.
FIG. 12 is a schematic diagram of another application scenario of a data processing method provided by a further embodiment of the present application.
FIG. 13 is a further flow diagram of a data processing method provided by an embodiment of the present application.
FIG. 14 is a schematic diagram of a modular processing procedure of a data processing method provided by an embodiment of the present application.
FIG. 15 is a further flow diagram of a data processing method provided by an embodiment of the present application.
FIG. 16 is a structural schematic diagram of an embodiment of a data processing apparatus of a data processing method provided by the present application.
FIG. 17 is a structural schematic diagram of another embodiment of a data processing apparatus of a data processing method provided by the present application.
FIG. 18 is a structural schematic diagram of a server provided by the present application.
FIG. 19 is a structural schematic diagram of a terminal device provided by the present application.

### DESCRIPTION OF EMBODIMENTS

Here, exemplary embodiments will be described in detail, and their examples are shown in the attached figures. When the following description involves the figures, unless otherwise indicated, the same numbers in different drawings represent the same or similar elements. Implementations described in the following exemplary embodiments do not represent all implementations consistent with the present application. On the contrary, they are merely examples of the apparatus and method that are consistent with some aspects of the present application as detailed in the attached claims.

The terms "first", "second", etc. involved in the present application are only used for descriptive purposes and should not be understood as indicating or suggesting relative importance or implicitly indicating the quantity of the indicated technical features. In the descriptions of the following embodiments, "multiple" means two or more, unless otherwise explicitly and specifically limited.

It should be noted that in this document, step codes such as S1 and S2 are adopted. The purpose is to express the corresponding content more clearly and concisely, and it does not constitute a substantive restriction on the sequence. When those skilled in the art implement it specifically, they may first carry out S2 and then S1, etc., but all of these should be within the protection scope of the present application.

It should be understood that the specific embodiments described herein are only intended to explain the present application and are not intended to limit it.

Differential restoration technology is applied in a software upgrade scenario of an electronic device. Differential restoration technology includes a differential algorithm and a restoration algorithm. A server can obtain difference data of a software without upgrade and after upgrade through the differential algorithm. A client terminal can upgrade a software that has not been upgraded by the restoration algorithm and the difference data.

When executing the differential algorithm, a large quantity of differential data is usually obtained, resulting in a large quantity of data in patch files used for software upgrade. This will increase a traffic for downloading differential data on the client terminal, prolong a download time and increase an occupancy of a storage space, which is not conducive to the client terminal upgrading the software that has not been upgraded.

Therefore, how to minimize the size of the patch file as much as possible through the differential algorithm is an urgent problem to be solved at present.

In view of this, the present application provides a data processing method, a server, a terminal device, a storage medium, a chip system, and a program product. By creating a data string set for old file data of a target application, a retained data set and a newly added data set of new file data of the target application compared to the old file data can be obtained according to the data string set and a preset data string length threshold; a patch file for the target application is generated according to relevant information of at least one piece of retained data in the retained data set and position information of at least one piece of newly added data in the newly added data set in the new file data to perform data update for the target application. In the above method, by setting a data string length threshold for a length of the retained data, a quantity of the retained data and a size of the newly added data can be reduced to compress a size of the patch file, a traffic of the terminal device downloading the patch file is reduced and an upgrade time of the target application is shortened.

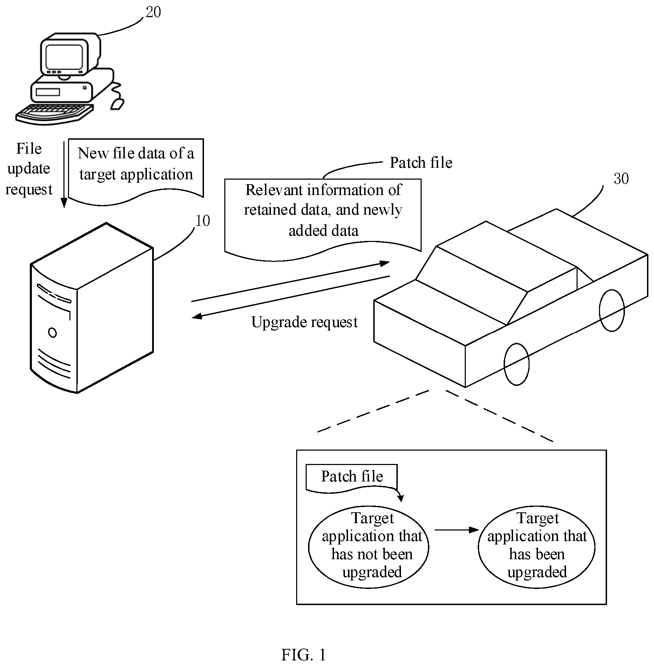

Please refer to FIG. 1, FIG. 1 is a diagram of an application scenario of a data processing method of the present application. The application scenario includes a server 10, a first device 20 and a second device 30. The server 10 receives a file update request from the first device 20, where the file update request includes new file data (the new file data is a data of a target application that has been upgraded) of a target application (Application, APP), acquiring old file data (the old file data is a data of the target application that has not been upgraded), and then, generates a patch file according to the data processing method of the present application, where content of the patch file includes newly added data in a newly added data set and relevant information of a retained data in a retained data set, the relevant information includes a data length of the retained data and position information of the retained data in the new file data and the old file data respectively.

The server 10 receives an upgrade request from the second device 30, sends the patch file to the second device 30, and the second device 30 upgrades the target application deployed on the second device 30 according to the patch file.

In some embodiments, the first device is a device terminal for developing new file data and/or old file data of the target application. The first device includes a tablet computer, a desktop computer, etc.

In some embodiments, the second device includes a user-use device such as a vehicle, an unmanned aerial vehicle, a smartwatch, a mobile phone and a tablet computer.

It should be noted that FIG. 1 is merely a schematic diagram of an application scenario provided by an embodiment of the present application. The embodiment of the present application does not limit the actual forms of the various devices included in FIG. 1, nor do they limit the interaction methods between the devices in FIG. 1. In the specific application of the solution, they can be set according to actual needs.

The following provides a detailed description with specific embodiments for the technical solution of the present application, and how the technical solution of the present application can solve the above technical problem. The following specific embodiments can be combined with each other. For the same or similar concepts or processes, they may not be repeated in some embodiments. The following will describe the embodiments of the present application in combination with the attached figures.

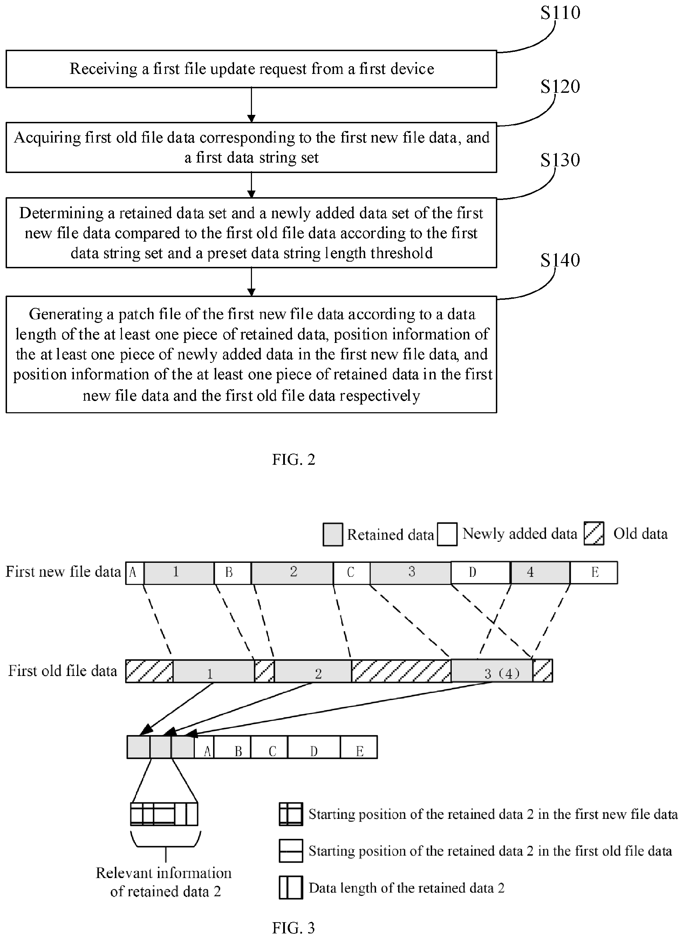

FIG. 2 is a flow diagram of an embodiment of a data processing method provided by the present application. An execution entity of the embodiment of the present application can be a server, and the method in the embodiment can be implemented through software, hardware, or a combination of software and hardware. As shown in FIG. 2, this data processing method can include the following steps.

Step S110: receiving a first file update request from a first device.

The first file update request includes first new file data of a first target application. The first target application includes a navigation and mapping application, an entertainment application, a communication application, an intelligent driving assistance application, or a parking or charging application, etc. The first new file data is first target application data after an updating (the updating includes an upgrade).

It can be understood that in order to upgrade the first target application, after the research and development personnel develop the first new file data of the first target application, the first file update request is generated by the first device to send the first new file data to the server.

Step S120: acquiring first old file data corresponding to the first new file data, and a first data string set.

The first old file data and the first data string set can be acquired from a storage apparatus of the server. The first old file data can be a first target application data before the updating. The first data string set is a set of data strings of different lengths created based on the first old file data and the first new file data. After sorting the data strings of different lengths in ascending order of the data string lengths, these data strings are stored in the first data string set to determine the retained data in the subsequent steps. In some embodiments, the first data string set can also be described as a suffix array, and the data string can also be described as a byte string.

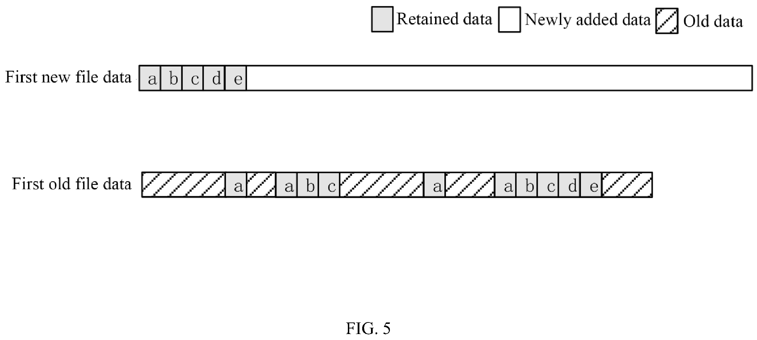

For example, as shown in FIG. 5, the first new file data includes "abcde". Based on the difference algorithm, data strings of different lengths beginning with a can be found in the first old file data, such as "a", "abc", "a" and "abcd" in FIG. 5. Similarly, it is also possible to search for data strings of different lengths beginning with b, or beginning with c, or beginning with d, or beginning with e in the first old file data.

Step S130: determining a retained data set and a newly added data set of the first new file data compared to the first old file data according to the first data string set and a preset data string length threshold.

Specifically, a certain byte in the first new file data is selected, a data string beginning with this byte is read in the first data string set, the data string is compared with the preset data string length threshold, and a data string whose data length is greater than the data string length threshold is treated as one piece of retained data. For example, as shown in FIG. 5, the retained data is the data present in both the first new file data and the first old file data. In the first new file data, the same retained data as the first old file data or a subset of the retained data of the first old file data can be found. Typically, the retained data set includes at least one piece of retained data.

For example, as shown in FIG. 3, the first new file data includes four pieces of retained data 1, 2, 3, and 4. The first old file data includes three pieces of retained data 1, 2 and 3. The retained data 3 contains the retained data 4, that is, the retained data 4 is a subset of the retained data 3, and a data length of each piece of retained data is greater than the data string length threshold.

After multiple pieces of retained data are determined, newly added data between adjacent two pieces of retained data can be read. Since there are multiple pieces of retained data, the newly added data set including at least one piece of newly added data can be obtained. As shown in FIG. 3, the newly added data set includes five pieces of newly added data A, B, C, D and E from the first new file data.

It should be understood that for new file data of the same size, if the data length of each piece of retained data is greater than the data string length threshold, then the quantity of retained data will be smaller (for example, some retained data can be reused, such as the retained data 3 and the retained data 4 in FIG. 3), and the quantity of newly added data will also be smaller.

Step S140: generating a patch file of the first new file data according to a data length of the at least one piece of retained data, position information of the at least one piece of newly added data in the first new file data, and position information of the at least one piece of retained data in the first new file data and the first old file data respectively.

The patch file is used to perform data update for the first target application. For example, the first target application can be upgraded according to the patch file. The patch file includes relevant information of the newly added data set and the retained data set. The relevant information of the retained data set includes the data length of the retained data and the position information of the retained data in the first new file data and the first old file data respectively. The position information includes a starting position. As shown in FIG. 3, the patch file includes the relevant information of three pieces of retained data, and five pieces of newly added data A, B, C, D and E of the first new file data. For example, the relevant information of the retained data 2 includes a starting position of the retained data 2 in the first new file data, a starting position of the retained data 2 in the first old file data, and a data length of the retained data 2.

It can be understood that the longer each piece of retained data is, the less the overall quantity of retained data will be, the smaller the newly added data determined between adjacent retained data blocks will be, and thus the smaller the patch file will be. Therefore, by setting the data string length threshold, the longest retained data in the old file data can be found as much as possible, ultimately achieving the purpose of compressing the patch file.

Please refer to FIG. 1 again. In an application scenario, the server 10 receives a file update request from the first device 20, where the file update request includes new file data of an intelligent driving assistance application, acquires old file data of the intelligent driving assistance application, and a data string set, then, determines a retained data set and a newly added data set of the new file data compared to the old file data according to the data string set and a preset data string length threshold, and finally, generates a patch file of the new file data according to a data length of at least one piece of retained data, position information of at least one piece of newly added data in the new file data, and position information of the at least one piece of retained data in both the new file data and the old file data of the intelligent driving assistance application.

The server 10 receives an upgrade request from a vehicle 30 and sends the patch file to the vehicle 30. The vehicle 30 upgrades the intelligent driving assistance application deployed on the vehicle 30 according to the patch file.

In the above technical solution, the server receives the first file update request from the first device and acquires the first old file data corresponding to the first new file data, and the first data string set, then, determines the retained data set and the newly added data set of the first new file data compared to the first old file data according to the first data string set and the preset data string length threshold, if the length of the retained data in the retained data set is greater than the data string length threshold, reduces the size of the newly added data in the newly added data set and the quantity of the retained data in the retained data set, and finally, generates the patch file of the first new file data according to the data length of the at least one piece of retained data, the position information of the at least one piece of newly added data in the first new file data, and the position information of the at least one piece of retained data in the first new file data and the first old file data respectively. By setting a data string length threshold for a length of the retained data, a quantity of the retained data and a size of the newly added data can be reduced to compress a size of the patch file, a traffic of the terminal device downloading the patch file is reduced and an upgrade time of the target application is shortened.

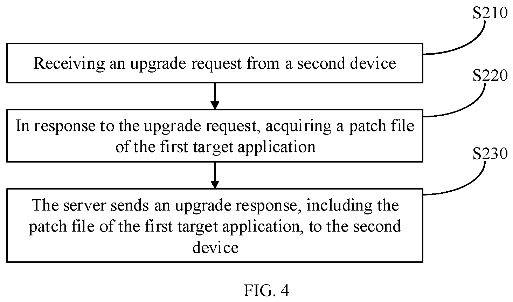

In some embodiments, please refer to FIG. 4. The data processing method further includes the following steps.

Step S210: receiving an upgrade request from a second device.

The upgrade request is used to request an upgrade for the first target application. When the second device detects that the first target application needs to be upgraded, the second device generates the upgrade request and sends the upgrade request to the server.

Step S220: in response to the upgrade request, acquiring a patch file of the first target application.

In response to the upgrade request, the server acquires the patch file of the first target application, which is obtained according to the first new file data and the first old file, from the storage device.

Step S230: sending an upgrade response to the second device.

The server sends the upgrade response, including the patch file of the first target application, to the second device.

In some embodiments, the determining the retained data set and the newly added data set of the first new file data compared to the first old file data according to the first data string set and the preset data string length threshold, including the following steps.

Step S310: starting from a first byte of the first new file data, searching for a longest data string beginning with the first byte in the first data string set.

Step S320: determining whether to treat the longest data string as one piece of retained data by comparing a size relationship between a length of the longest data string and the data string length threshold.

Specifically, if the length of the longest data string is greater than the data string length threshold, it is determined to treat the longest data string as one piece of retained data. If the length of the longest data string is less than or equal to the data string length threshold, starting from a next byte of the first byte, it is continued to search for whether there is a longest data string beginning with the next byte in the first data string set.

Step S330: obtaining the retained data set after traversing all bytes of the first new file data.

Steps S310 to S330 are further explained by steps a1 to a3 of the following example.

For example, the data string length threshold is 12 bytes. The server performs the following steps.

Step a1: starting from the first byte of the first new file data, searching for the longest data string beginning with the first byte in the first data string set.

Step a2: if a length of the longest data string, Len, is greater than 12 bytes, treating the longest data string as the retained data, and recording the relevant information of the retained data. Starting from a Len+1 byte of the first new file data, continuing to search for a longest data string beginning with the Len+1 byte in the first data string set until all bytes of the first new file data have been traversed.

Step a3: if the length of the longest data string, Len, is less than or equal to 12 bytes, starting from a second byte of the first new file data, continuing to search for the longest data string beginning with the second byte in the first data string set until all bytes of the first new file data have been traversed.

Steps S310 and S320 are explained in combination with the example in FIG. 5 in the below.

For example, as shown in FIG. 5, the first new file data includes "abcde...", and the first byte of the first new file data is "a". In one example, suppose that the first data string set includes three types of data strings beginning with "a", namely "a", "abc", and "abcde". Starting from the "a" of the first new file data, the longest data string beginning with "a" can be found in the first data string set as "abcde". If the data string length threshold is 4 and a length of the longest data string "abcde" is greater than the data string length threshold of 4, then this longest data string "abcde" will be treated as the retained data. In another example, suppose that the first data string set includes three types of data strings beginning with "a", namely "a", "ab", and "abc". Starting from the "a" of the first new file data, the longest data string beginning with "a" can be found in the first data string set as "abc". If the data string length threshold is 4 and a length of the longest data string "abc" is less than the data string length threshold of 4, then the "abc" is not treated as the retained data. Starting from the second byte "b" of the first new file data, the longest data string beginning with the second byte is searched for in the first data string set (which may include data strings beginning with "b") and by comparing the size relationship between the length of the longest data string and the data string length threshold, it is determined whether to treat the longest data string as one piece of retain data.

Step S340: determining the newly added data set according to a position of the retained data in the retained data set in the first new file data.

In one implementation, according to the position of the retained data in the first new file data, the newly added data between two adjacent retained data in the retained data set is read to obtain the newly added data set.

It can be understood that starting from a first byte of the first new file data, a longest data string beginning with the first byte is found in the first data string set; by comparing a size relationship between a length of the longest data string and the data string length threshold, it is determined whether to treat the longest data string as one piece of retained data. According to a search method of the first byte, after traversing all the bytes of the first new file data, the retained data set and the relevant information of the retained data set are obtained. According to the position of the retained data in the first new file data in the retained data set, the newly added data set can be determined. In this way, the differential processing on a pair of the first new file data and the first old file data has been completed, the patch file can be generated according to the relevant information of the retained data set and the newly added data set.

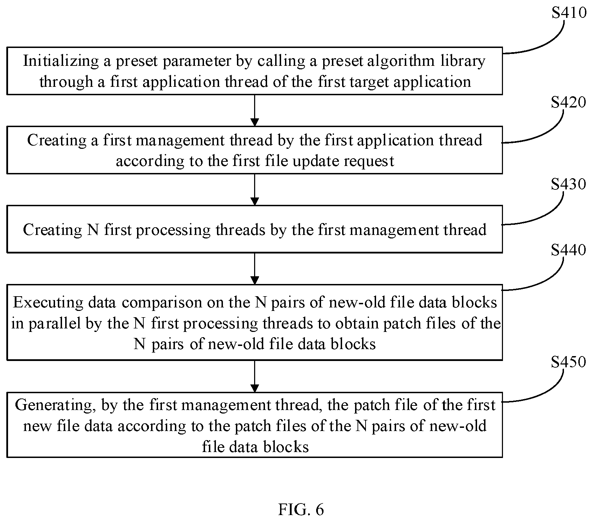

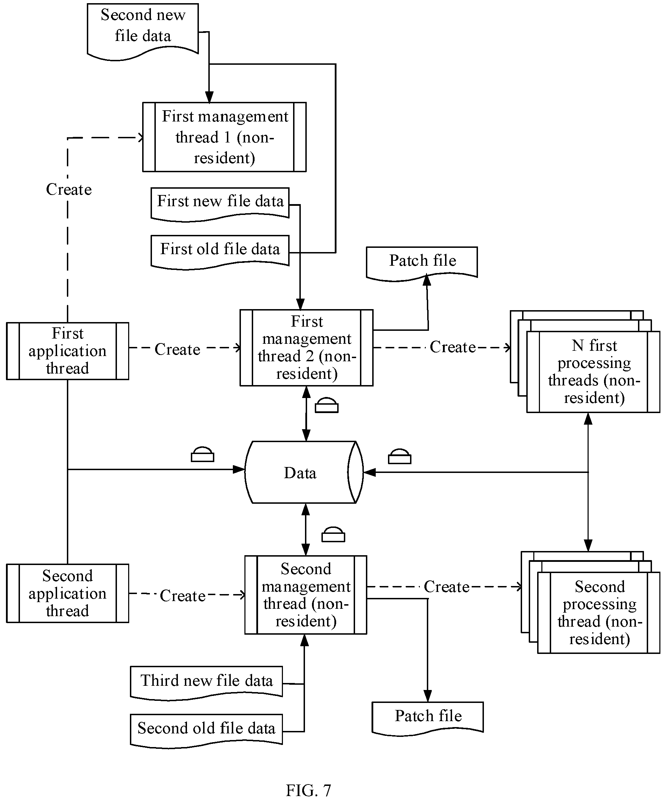

In some embodiments, in a process that the server performs differential processing on a pair of the new file data and the old file data to generate a patch file, the server can process multiple new-old file data blocks generated by the pair of the new file data and the old file data in parallel by multi-threading to improve the speed of differential processing. Take the processing of the first new file data and the first old file data as examples for illustration. Specifically, please refer to FIG. 6 and FIG. 7. The data processing method further includes the following steps.

Step S410: initializing a preset parameter by calling a preset algorithm library through a first application thread of the first target application.

The preset algorithm library stores the differential algorithm and can define an irrelevant interface of an operating system for the differential algorithm. Through the irrelevant interface, the differential algorithm can be adapted to different operating systems. The first application thread calls the differential algorithm by the irrelevant interface and initializes the preset parameter. The preset parameter includes the data volume threshold and the maximum value M of the processing threads executed in parallel. The data volume threshold refers to a size threshold of the new-old file data blocks.

It can be understood that after the sizes of a pair of new file data and old file data is obtained, by presetting the size threshold of the new-old file data blocks and the maximum value M of the processing threads executed in parallel, the size of the new-old file data blocks and the quantity of the first processing thread and other index parameters can be controlled. Staff can control the index parameters by modifying the preset parameter.

Step S420: creating a first management thread by the first application thread according to the first file update request.

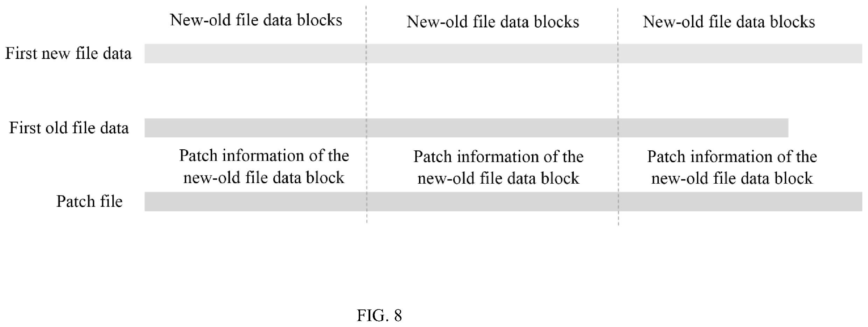

After receiving the first file update request, the server creates the first management thread by the first application thread. The first management thread is used to, according to a preset data volume threshold, perform data splitting for the first new file data and the first old file data respectively to obtain N pairs of new-old file data blocks. N is a positive integer greater than 1 and less than or equal to M. As shown in FIG. 8, the first file data and the first old file data can be split into at least three pairs of new-old file data blocks. Each pair of new-old file data blocks includes a new file data block and an old file data block.

Step S430: creating the N first processing threads by the first management thread, where the N first processing threads correspond one-to-one with the N pairs of new-old file data blocks.

It can be understood that by the first management thread splitting a pair of new file data and old file data according to the preset data volume threshold, N pairs of new-old file data blocks are obtained, and N first processing threads are created for the N pairs of new-old file data blocks. The N first processing threads simultaneously process the N pairs of new-old file data blocks, which achieves parallel processing of the N pairs of new-old file data blocks, and shortens differential time for processing a pair of new file data and old file data. Meanwhile, by adjusting the maximum value M of the processing threads executed in parallel, the quantity of threads processing in parallel can be adjusted, effectively regulating the length of the differential time.

Step S440: executing data comparison on the N pairs of new-old file data blocks in parallel by the N first processing threads to obtain patch files of the N pairs of new-old file data blocks.

Each first processing thread separately reads a block of new-old file data block into a memory, compares the data to obtain one piece of patch information corresponding to each block of new-old file data block. The specific approach is consistent with the technical principles of the above steps S120 to S130. The difference lies in that the object of differential processing in the embodiments of the present application is the new-old file data block, and the information generated by differential processing is patch information. Specifically, the specific methods include the following steps.

Step b1: the first processing thread creates multiple suffixes for the old file data block of the new-old file data block.

Step b2: after sorting the multiple suffixes in an ascending order from smallest to largest, obtaining a suffix array.

Step b3: starting from a first byte of the new file data block of the new-old file data block, searching for the longest data string beginning with the first byte in the suffix array.

Step b4: if a length of the longest data string, Len, is greater than 12 bytes, treating the longest data string as the retained data, and recording relevant information of the retained data, and starting from a Len+1 byte of the new file data block, continuing to search for the longest data string beginning with the Len+1 byte in the suffix array until all bytes of the new file data block have been traversed.

Step b5: if the length of the longest data string, Len, is less than or equal to 12 bytes, starting from a second byte of the new file data block, continuing to search for the longest data string beginning with the second byte in the suffix array until all bytes of the new file data block have been traversed.

Step b6: generating the patch information according to the relevant information of the retained data and the newly added data between adjacent retained data.

For the technical features not repeated in detail in steps b1 to b6, please refer to steps S120 to S130 and their detailed steps.

Step S450: generating, by the first management thread, the patch file of the first new file data according to the patch files of the N pairs of new-old file data blocks.

According to the N patch information corresponding to the N pairs of new-old file data blocks, the patch file can be obtained. Thus, a differential process between a pair of new file data and old file data is completed.

In one implementation, by the first management thread splitting a pair of new file data and old file data into multiple new-old file data blocks. Multiple first processing threads are created for several times. Each time, several first processing threads read several new-old file data blocks from the multiple new-old file data blocks into a memory for differential processing. After generating patch information, the new-old file data blocks are deleted. This effectively reduces the occupancy of memory.

In some embodiments, multiple pairs of new file data and old file data can also be processed simultaneously in parallel to obtain multiple patch files corresponding to multiple pairs of new file data and old file data. Please refer to FIG. 7 again for an illustration of processing two pairs of new file data and old file data simultaneously. The data processing method further includes the following steps.

Step S510: receiving a second file update request from the first device while receiving the first file update request, where the second file update request includes a third new file data of a second target application.

A function of the second target application is different from those of the first target application. The second target application can also include a navigation and mapping application, an entertainment application, a communication application, an intelligent driving assistance application, or a parking or charging application, etc. For example, the first target application is an intelligent driving assistance application, and the second target application is a communication application.

Step S520: creating a second application thread of the second target application according to the second file update request.

The second application thread is used to initialize the preset parameter by calling the preset algorithm library.

Step S530: creating a second management thread by the second application thread.

Step S540: creating N second processing threads by the second management thread, where the N second processing threads correspond one-to-one with the N pairs of new-old file data blocks

Step S550: executing data comparison on the N pairs of new-old file data blocks in parallel by the N second processing threads to obtain patch files of the N pairs of new-old file data blocks.

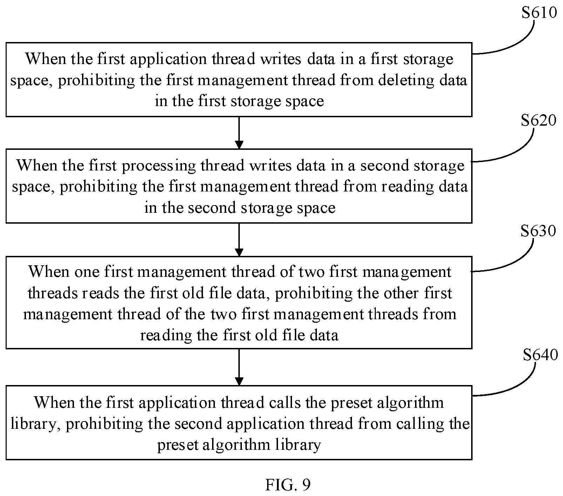

In some embodiments, during a process of differential processing, if the same data is operated on simultaneously between multiple application threads, between multiple management threads, between the application thread and the management thread, or between the management thread and processing thread, the thread that operates first acquires a mutex lock to prevent functional disorders in reading data between threads. Specifically, please refer to FIG. 9, the data processing method further includes the following steps.

Step S610: when the first application thread writes data in a first storage space, prohibiting the first management thread from deleting data in the first storage space.

Specifically, the first storage space is used to store information of the process of the differential processing, including information of the N first processing threads generated based on the first file update request. During the process of differential processing, according to the first file update request, the first application thread writes the information of the N first processing threads corresponding to the first file update request in the first storage space. The first management thread reads the information of the N first processing threads corresponding to the first file update request from the first storage space and creates the N first processing threads. After the differential processing is completed, the first management thread is further used to delete the information corresponding to the N first processing threads after generating the patch file of the first new file data. Therefore, throughout the entire process of the differential processing, the first application thread and the first management thread may simultaneously operate on the data in the first storage space. When the first application thread writes data (for example, the information of the N first processing threads) in the first storage space, the first management thread is prohibited from deleting data (for example, the information of the N first processing threads) in the first storage space. That is, the first application thread acquires a mutex lock to prevent functional disorders in reading data between the first application thread and the first management thread.

Step S620: when the first processing thread writes data in a second storage space, prohibiting the first management thread from reading data in the second storage space.

Specifically, the second storage space is used to store a processing state and/or a processing progress of the first processing thread. The processing state refers to whether the patch information has been successfully generated or whether a pair of new-old file data blocks have been successfully differentiated. The processing progress refers to a differential progress of a pair of new-old file data blocks, such as a differential progress of 5% and 10%, etc.

During the process of the differential processing, the first processing thread is used to write a processing state and/or a processing progress of the first processing thread in the second storage space. The first management thread is used to read the processing state and/or the processing progress of the first processing thread from the second storage space. Thus, the first management thread can manage the first processing thread according to the processing state and/or the processing progress. Therefore, the first management thread and the first processing thread may also operate on the data in the second storage space simultaneously. When the first processing thread writes data in the second storage space, the first management thread is prohibited from reading data in the second storage space That is, the first processing thread acquires a mutex lock to prevent functional disorders in reading data between the first management thread and the first processing thread.

Step S630: when one first management thread of two first management threads reads the first old file data, prohibiting the other first management thread of the two first management threads from reading the first old file data.

Specifically, if the first file update request includes the first new file data and second new file data of the first target application, where both the first new file data and the second new file data correspond to the first old file data, then two first management threads are created by the first application.

That is to say, please refer to FIG. 7 again. The data processing method of the present application can also upgrade the first target application to different versions simultaneously. The first new file data and the second new file data are respectively different versions of the first target application data. Two first management threads are created by the first application, where one first management thread 1 obtains one version of the patch file of the target application according to the first old file data and the first new file data, and another first management thread 2 obtains another version of the patch file of the target application according to the first old file data and the second new file data. Therefore, the two first management threads may simultaneously read the first old file data. When the first management thread 1 reads the first old file data, the first management thread 2 is prohibited from reading the first old file data. That is, the first management thread that reads the number of first old files first acquires a mutex lock to prevent functional disorders in reading data between the two management threads.

Step S640: when the first application thread calls the preset algorithm library, prohibiting the second application thread from calling the preset algorithm library.

It can be understood that when the first application thread and the second application thread simultaneously call the preset algorithm library and initialize preset parameters, and the preset parameters initialized by the first application thread and the second application thread are different, the first application thread that calls the preset algorithm library first is allowed to call, but the second application thread is prohibited from calling it. That is, the first application thread acquires a mutex lock to prevent functional disorders in reading data between two application threads.

It can be understood that the sequence between steps S610 and S640 is not limited.

It should be noted that among various open-source implementation solutions of differential algorithms in the related art, some focus on the size of patch files, some focus on the duration of differential restoration, some focus on the quantity of memory or CPU occupied, and some others are targeted at specific file formats. The focused features are single and cannot adapt to complex and changeable application scenarios.

Compared with the open-source implementation solutions of the related art, in some of the above embodiments, the design of application thread, processing thread, and management thread enables adaptation to different operating systems by irrelevant interface. By initializing the preset parameter, an indicator parameter, such as the size of the new-old file data block and the quantity of the processing threads, can be controlled. N first processing threads simultaneously process N pairs of new-old file data blocks, parallel processing of the N pairs of new-old file data blocks is achieved, the difference time for processing one pair of the new file data and the old file data is shortened, and memory occupancy is reduced effectively. Through the mutex lock, functional disorders in reading data between threads are prevented and multiple characteristics can be taken into account.

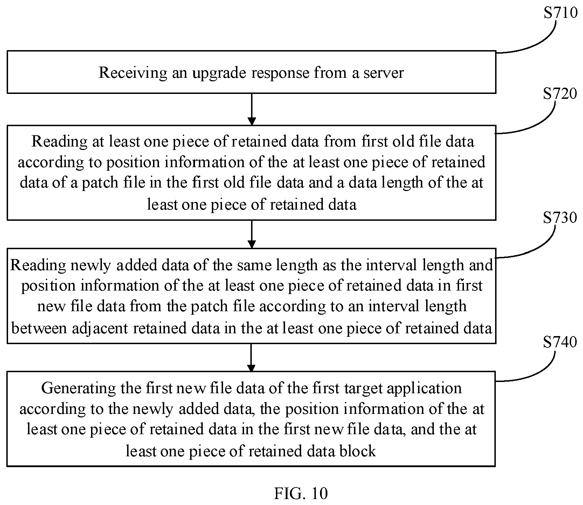

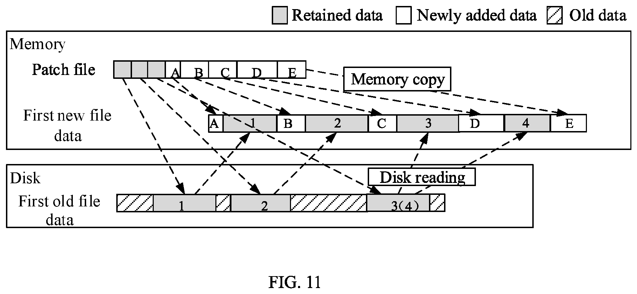

The present application further provides a data processing method, the data processing method is applied to the terminal device. Please refer to FIG. 10 and FIG. 11. The data processing method includes the following steps.

S710: receiving an upgrade response from a server.

S720: reading at least one piece of retained data from first old file data according to position information of the at least one piece of retained data of a patch file in the first old file data and a data length of the at least one piece of retained data.

S730: reading newly added data of the same length as the interval length and position information of the at least one piece of retained data in first new file data from the patch file according to an interval length between adjacent retained data in the at least one piece of retained data.

S740: generating the first new file data of the first target application according to the newly added data, the position information of the at least one piece of retained data in the first new file data, and the at least one piece of retained data block.

Specifically, to define the irrelevant interface of the operating system for the restoration algorithm, the restoration algorithm is adapted to different operating systems by the irrelevant interface. Please refer to FIG. 11 again. The terminal device receives an upgrade response including the patch file of the first target application, and initializes the preset parameter by calling the restoration algorithm through the irrelevant interface, and performs the following steps.

Step c1: loading the patch file into memory and reading patch information of one new-old file data block from the patch file.

Step c2: extracting relevant information of one retained data from the patch information, and then reading the retained data from the old file on a disk according to a starting position of the old file recorded in the relevant information and the data length of the retained data.

Step c3: according to an interval length between adjacent retained data, reading the newly added data of the same length as the interval length from the patch information.

Step c4: processing all retained data in sequence to restore all newly added data, and generating a new file data block according to the position information of the newly added data, at least one piece of retained data in the first new file data, and at least one piece of retained data.

Step c5: repeating steps c1 to c4 until the entire first new file data is restored according to the new file data block.

It can be understood that the restoration algorithm involves a large number of input/output (I/O) operations. Therefore, the retained data of the first old file data and the patch file can be read into a memory at one time, and the first new file data restored can be temporarily stored in memory until the restoration is completed and then written to the disk again.

It can be understood that considering that the restoration algorithm often runs in an environment with less memory, during the process of differential processing, the first management thread splits the new-old file data block into a specified size, which can meet memory requirements during restoration.

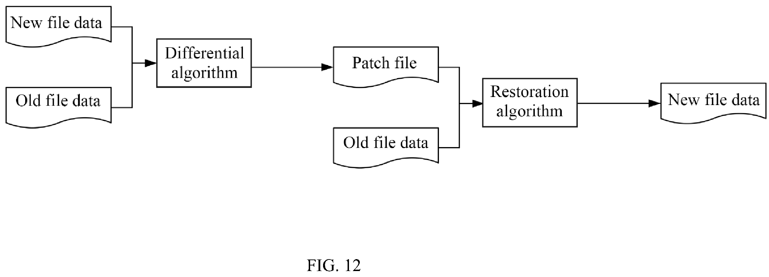

Please refer to FIG. 12 and FIG. 1. In another application scenario of the present application, the server 10 receives the file update request from the first device 20, where the file update request includes the new file data of the intelligent driving assistance application, acquires the old file data of the intelligent driving assistance application, and the data string set, then, according to the data string set and the preset data string length threshold, determines the retained data set and the newly added data set of the new file data compared to the old file data, and finally, generates a patch file of the new file data according to the data length of at least one piece of retained data, the position information of at least one piece of newly added data in the new file data, and the position information of the at least one piece of retained data in both the new file data and the old file data of the intelligent driving assistance application.

The server 10 receives the upgrade request from the vehicle 30 and sends the upgrade response to the vehicle 30. The vehicle 30 reads at least one piece of retained data from the old file data according to the position information of at least one piece of retained data in the old file data of the intelligent driving assistance application in the patch file of the upgrade response, and the data length of at least one piece of retained data. Next, the newly added data of the same length as the interval length, and the position information of at least one piece of retained data in the new file data of the intelligent driving assistance application are read from the patch file according to the interval length between adjacent retained data in at least one piece of retained data.

The new file data of the intelligent driving assistance application are generated according to the newly added data, the position information of at least one piece of retained data in the new file data, and at least one piece of retained data block to complete the upgrade of the intelligent driving assistance application deployed in the vehicle 30.

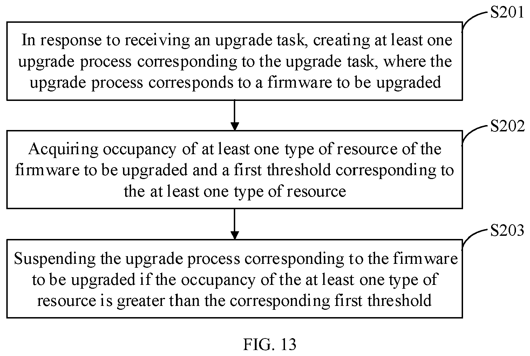

FIG. 13 is a further flow diagram of a data processing method provided by an embodiment of the present application. An execution entity of the embodiment of the present application can be the second terminal in FIG. 1, or a processing unit, a processor, a control circuit, etc. in the second terminal. This embodiment does not impose any special limitations on this. As shown in FIG. 13, after the above step S710, the method includes the following steps.

S201: in response to receiving an upgrade task, creating at least one upgrade process corresponding to the upgrade task, where the upgrade process corresponds to a firmware to be upgraded.

In this step, the upgrade task can be sent by the server or by terminal devices such as mobile phones and computers. The creating each upgrade process corresponding to upgrade task can be creating upgrade process according to the content of the upgrade task, and can also be executing an executable file corresponding to the upgrade task to generate each upgrade process.

S202: acquiring occupancy of at least one type of resource of the firmware to be upgraded and a first threshold corresponding to the at least one type of resource.

In this step, the acquiring occupancy of all types of resources of the firmware to be upgraded can be acquired through preset command lines, scripts, etc. The first threshold corresponding to all types of resources of the firmware to be upgraded can be obtained by searching for the preset corresponding relationship.

Specifically, the acquiring the first threshold corresponding to all types of resources of the firmware to be upgraded can include reading the corresponding relationship between the corresponding resource and the threshold according to the identification of the firmware to be upgraded to obtain the first threshold corresponding to all types of resources.

For example, for current firmware A, B, C, and D to be upgraded, each firmware to be upgraded has a corresponding relationship between the resource and the threshold. A corresponding relationship between the resource corresponding to the firmware A to be upgraded and the threshold includes "a first threshold of a processor is 70%", "a first threshold of I/O interface capability is 80%", and "a stored first threshold is 50%". A corresponding relationship between the resource corresponding to the firmware B to be upgraded and the threshold includes "a first threshold of a processor is 50%", "a first threshold of I/O interface capability is 70%", and "a stored first threshold is 70%". The corresponding relationship between the resources of the firmware C and the firmware D with respective thresholds will not be repeated here. The corresponding relationship between the resources of each firmware and the threshold can be preset by the staff.

S203: suspending the upgrade process corresponding to the firmware to be upgraded if the occupancy of the at least one type of resource is greater than the corresponding first threshold.

This step can include that if the occupancy of any type of resource of the firmware to be upgraded is greater than the corresponding first threshold, the upgrade process corresponding to the firmware to be upgraded is suspended. When there are multiple firmware to be upgraded, if any type of resource of any firmware to be upgraded exceeds the first threshold corresponding to this firmware to be upgraded and this type of resource, the upgrade process corresponding to this firmware to be upgraded is suspended. The ways to suspend the upgrade process corresponding to the firmware to be upgraded can include: using a preset program or script to suspend the upgrade process corresponding to the firmware to be upgraded. It can further include: acquiring an identifier of the upgrade process corresponding to the firmware to be upgraded, writing the obtained identifier of the upgrade process into a preset command template or program template to obtain a target command or a target program, executing the target command or target program, thereby suspending the upgrade process corresponding to the firmware to be upgraded.

For example, a corresponding relationship between the resource corresponding to the current firmware A to be upgraded and the threshold includes "a first threshold of a processor is 70%", "a first threshold of the I/O interface capability is 80%", and "a stored first threshold is 50%", while the acquired firmware A to be upgraded has a processor occupancy of 72%, an I/O interface occupancy of 50%, and a storage occupancy of 30%, then the upgrade process corresponding to the firmware A is suspended. For example, the corresponding relationship between the resources corresponding to the current firmware C to be upgraded and the threshold includes "a first threshold of a processor is 70%", "a first threshold of the I/O interface capability is 80%", and "a stored first threshold is 90%", while the acquired firmware C to be upgraded has a processor occupancy of 60%, an I/O interface occupancy of 82%, and a storage occupancy of 91%, then the upgrade process corresponding to the firmware C to be upgraded is suspended.

From the description of the above embodiments, it can be known that in the embodiment of the present application, after receiving the upgrade task, at least one upgrade process corresponding to the upgrade task is created, the occupancy of all types of resources of the firmware to be upgraded and the first threshold corresponding to at least one type of resource of the firmware to be upgraded are acquired. In a case that the occupancy corresponding to the at least one type of resource is greater than the first threshold, the upgrade process of this firmware to be upgraded is suspended to ensure the normal operation of the vehicle while carrying out the firmware upgrade, the firmware is avoided from affecting the operation of other programs. During an OTA upgrade, there is no need to stop the vehicle operation, and at the same time, the resource utilization efficiency is improved.

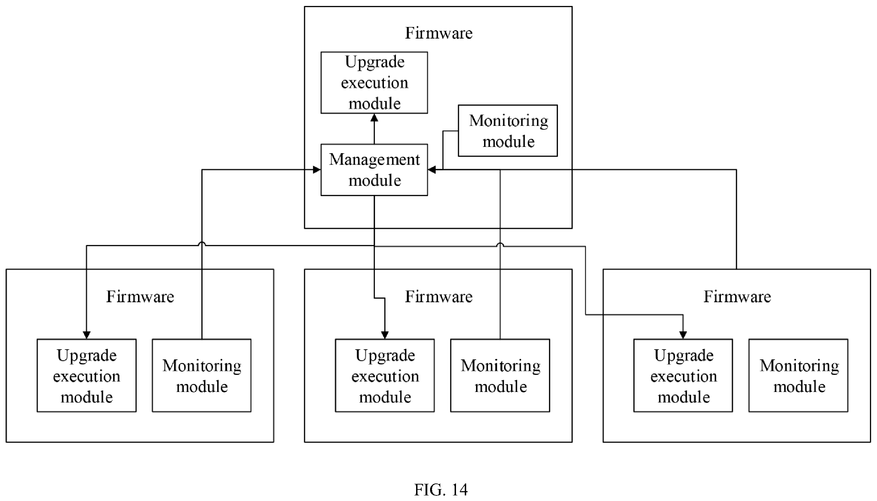

FIG. 14 is a schematic diagram of a modular processing procedure of a data processing method provided by an embodiment of the present application. As shown in FIG. 14, the firmware to be upgraded includes a management module, an upgrade execution module and a monitoring module. The management module can run in a main processing unit or a main firmware, while the upgrade execution module and the monitoring module can be installed in each firmware. The management module is configured to send a control instruction to the upgrade execution module, thereby controlling each upgrade execution module and independently controlling each upgrade execution module. The monitoring module is configured to detect the occupancy of all types of resources and send the occupancy corresponding to all types of resource to the management module. The detecting module is further configured to detect a first process and/or a second process mentioned below.

In one possible implementation, after the step S203 of suspending the upgrade process corresponding to the firmware to be upgraded if the occupancy of the at least one type of resource is greater than the corresponding first threshold, the method further includes:
S204: continuing the upgrade process corresponding to the firmware to be upgraded if occupancy of all types of resources of the firmware to be upgraded is less than a corresponding second threshold.

In this step, for example, a corresponding relationship between the resource corresponding to the current firmware D to be upgraded and the threshold includes "a second threshold of a processor is 70%", "a second threshold of I/O interface capability is 80%", and "a stored second threshold is 50%", while the acquired firmware D has a processor occupancy of 62%, an I/O interface occupancy of 50%, and a storage occupancy of 30%, then the upgrade process corresponding to firmware D is replied with. For example, the corresponding relationship between the resources corresponding to the current firmware E to be upgraded and the threshold includes "a second threshold of a processor is 80%", "a second threshold of I/O interface capability is 85%", and "a stored second threshold is 90%", while the acquired firmware E has a processor occupancy of 60%, an I/O interface occupancy of 82%, and a storage occupancy of 71%, then the upgrade process corresponding to the firmware E is continued.

The second threshold can be set in advance by the staff.

In one possible implementation, the second threshold can be less than the first threshold in the above step S202.

From the description of the above embodiments, it can be known that in the embodiment of the present application, in a case that the occupancy of all types of resources of the firmware to be upgraded is less than the corresponding second threshold, the upgrade process corresponding to the firmware to be upgraded is continued, thereby increasing the resource utilization efficiency by continuing the upgrade process in the case that occupancy of the resource is relatively small, without the need to stop the operation of the motor vehicle during the OTA upgrade.

In one possible implementation, after the above step S202 of acquiring the occupancy of at least one type of resource of the firmware to be upgraded and the first threshold corresponding to the at least one type of resource, the method further includes the following steps.

S1310: acquiring a first process running in the firmware to be upgraded if the occupancy of the at least one type of resource of the firmware to be upgraded is greater than the corresponding first threshold.

In this step, the occupancy of the resource can be the same as described in the above embodiments, and the first threshold can correspond to the type of resources. The first process can include a process that is in a running state. An acquisition method of the first process can include acquiring it through preset programs, scripts or commands, or sending a process acquisition request to a kernel and receiving an already running process sent by the kernel.

S1311: determining a priority of the first process.

This step can include searching for a corresponding relationship between the process and the priority according to the first process to obtain the priority corresponding to each running process.

S1312: determining a process to be terminated according to the priority of each first process.

This step can include determining the first process with the lowest corresponding priority as the process to be terminated.

For example, if priorities of current first processes A, B, C, and D are 2, 4, 6, and 10 respectively, then the first process A is determined as the process to be terminated. For example, if priorities of the current first processes E, F, G, and H are 0.32, 0.8, 0.66, and 0.2 respectively, then the first process D is determined as the process to be terminated.

S1313: terminating the process to be terminated.

This step can include writing the identifier of the process to be terminated into a preset instruction template, a command-line template or a program template, and executing the obtained instruction, command line or program to terminate the process to be terminated.

After this step, the above step 203 can be re-executed.

From the description of the above embodiment, it can be known that in the embodiment of the present application, in a case that there is a resource in the firmware to be upgraded whose occupancy is greater than the corresponding first threshold, the first process that is already running in the firmware to be upgraded is acquired, and the priority of each first process is determined, the process to be terminated is determined by the priority, and the process to be terminated is terminated. Thus the effect of releasing resources, increasing the speed of OTA upgrades, and ensuring the stable operation of the system is achieved.

In one possible implementation, the above step S1311 of determining the priority of each first process includes the following steps.

S13111: acquiring final response time of each first process, current time and a preset priority score corresponding to each first process.

In this step, the final response time can be obtained by reading a log file, and the current time can be obtained by acquiring a timestamp. The preset priority scores corresponding to each first process can be obtained by searching for a corresponding relationship between preset processes and their priority scores.

The corresponding relationship between the process and the priority score can be preset by the staff and stored in the format of a table or key-value pairs.

S13112: calculating a time difference between final response time corresponding to a target first process and the current time, where the target first process is any first process.

This step can include subtracting the final response time from the current time to obtain the time difference.

S13113: determining a minimum value and a maximum value of the preset priority score corresponding to each first process as input parameters.

In this step, for example, if there are currently 5 first processes with corresponding priority scores of 2, 3, 5, 7, and 9 respectively, then the minimum and maximum values are 2 and 9 respectively. For example, if there are currently 6 first processes with corresponding priority scores of 0.2, 0.1, 3, 0.8, and 6 respectively, then the minimum and maximum values are 0.1 and 6 respectively.

S13114: writing the input parameters into a preset formula template to obtain a priority calculation formula.

In this step, the preset formula template is, for example: $z = \left(cx+dy-{a}_{1}\right) \frac{{b}_{2} - {a}_{2}}{{b}_{1} - {a}_{1}} + {a}_{2}$ where a1 represents the above minimum value, b1 represents the above maximum value, a2, b2, c, and d represent preset constants, x represents the preset priority score corresponding to the target first process, y represents a time difference corresponding to the target first process, and z represents a priority corresponding to the target first process.

S13115: inputting the preset priority score corresponding to the target first process and the time difference into the priority calculation formula to obtain a priority corresponding to the target first process.

In this step, the priority corresponding to the target first process can be obtained by inputting the preset priority score corresponding to the target first process and the time difference into the formula obtained in the above step S2114. This will not be repeated here.

From the description of the above embodiment, it can be known that the embodiment of the present application calculates the time difference and generates the priority calculation formula by acquiring the final response time, the current time and the preset priority score of the process, inputs the preset priority score corresponding to the first process and the time difference into the priority calculation formula to obtain the priority corresponding to the first process. The implementation combines the time used by the application and the priorities set by the staff to sort the priority of each first process. Meanwhile, the formula used can ensure that the obtained priorities are distributed within the preset range, facilitating the sorting of priorities.

In one possible implementation, after the above step S1301 of in response to receiving the upgrade task, creating each upgrade process corresponding to the upgrade task, the method further includes the following steps.

S1320: acquiring a second process running in the firmware to be upgraded.

In this step, the second process running in the firmware to be upgraded can be acquired by commands, programs or scripts.

S1321: if the second process corresponding to the firmware to be upgraded includes a target process corresponding to the firmware to be upgraded, suspending the upgrade process corresponding to the firmware to be upgraded.

In this step, the target process corresponding to the firmware to be upgraded can be preset by the staff or be obtained by searching according to a driving scenario. The target processes, for example, include an autonomous driving process and object recognition process during vehicle driving, as well as processes such as temperature control, seat heating, and audio-visual playback that are triggered and activated by users.

For example, if the second process corresponding to firmware A to be upgraded includes processes a, b, c, and d, and the target processes corresponding to firmware A to be upgraded include processes b and f, then since the running processes include process b, the upgrade process corresponding to the firmware to be upgraded is suspended. For example, the running processes corresponding to the firmware C to be upgraded include processes d, e, f, g, and h, and the target processes corresponding to the firmware B to be upgraded include processes a, c, and f, then since the second process includes process f, the upgrade processes corresponding to the firmware B and C to be upgraded are suspended. A tentative way for the upgrade process corresponding to the firmware to be upgraded in this step is similar to a way to suspend the upgrade process corresponding to the firmware to be upgraded in the above step S1303. It will not be repeated here.

From the description of the above embodiment, it can be known that in the embodiment of the present application, by suspending the upgrade process of this firmware when there is a target process running in in the firmware to be upgraded, important processes or programs are avoided from being affected and the security of firmware upgrades is increased.

In one possible implementation, after the above step S1321 of suspending the upgrade process corresponding to the firmware to be upgraded, the method further includes:
S1330: if the target process is in a stopped state, continuing the upgrade process corresponding to the firmware to be suspended.

This step can include continuing the upgrade process corresponding to the firmware to be upgraded in a case that the target process is no longer included in the running process corresponding to the firmware to be upgraded. The continuing the upgrade process corresponding to the firmware to be upgraded can include reading the identifier of the upgrade process which is suspended in the above step S1321, writing the read identifier into a preset continue command template or a recovery program template to obtain a continue command or a recovery program, and executing the continue command or the recovery program to continue the upgrade process corresponding to the firmware to be upgraded.

From the description of the above embodiment, it can be known that in the embodiment of the present application, by continuing the upgrade process corresponding to the firmware to be upgraded after the target process stops running, the firmware to be upgraded is continued to be upgraded after the occupancy of the target process is removed, the effect of improving the resource utilization efficiency and reducing the time occupied by the upgrade is achieved.

In one possible implementation, after the above step S1301 of in response to receiving the upgrade task, creating each upgrade process corresponding to the upgrade task, the method further includes the following steps.

S1340: acquiring running applications.

This step can include acquiring the running applications by reading and adopting ways such as a task manager, an activity monitor, preset command lines, calling interface, etc. The currently running application can be one that has already started running before this step.

S1341: if the running applications include a target application, determining a firmware to be suspended corresponding to the target application.

In this step, the target application can be preset by the staff or determined according to a driving condition and a vehicle usage scenario. A process of determining the target application according to the vehicle usage scenario can include searching for an application corresponding to an activated function as the target application according to an activation state of the function by the user (usage scenario). Searching for the firmware to be suspended corresponding to the target application can include searching for a corresponding relationship between the preset application and the firmware according to the target application to obtain the firmware to be suspended.

The corresponding relationship between the application and the firmware can be preset by the staff according to experimental data or empirical parameters.

For example, the running applications include applications A, B, C, and D, and the target applications include applications D, U, and Y, then the firmware corresponding to application D is searched for and the firmware which is obtained through the search is taken as the firmware to be suspended. For example, if the running applications include applications E, F, G, and H, and the target applications include applications D, G, and H, then the firmware corresponding to applications G and H is searched for, and the firmware which is obtained through the search is taken as the firmware to be suspended.

S1342: suspending an upgrade process corresponding to the firmware to be suspended.

This step is similar to the method of suspending the upgrade process corresponding to the firmware to be upgraded in the above step S1321. It will not be repeated here.

From the description of the above embodiment, it can be known that in the embodiment of the present application, by acquiring the running application, and in a case that the running application contains a specific application, the upgrade process of the firmware corresponding to this specific application is suspended to avoid interference with the specific application and ensure the smooth operation of important applications.

In one possible implementation, after the above step S1342, the method further includes: if the target application stops running, continuing the upgrade process corresponding to the firmware to be suspended.

In one possible implementation, after the above-mentioned management module receives the upgrade task, it controls the upgrade execution module to start firmware flashing. During a flashing process, the management module can control the suspend and resumption of the flashing process according to the resource occupancy of the firmware and the application running in the firmware. After the flashing is completed, the new and old systems are switched, thereby completing the flashing task.

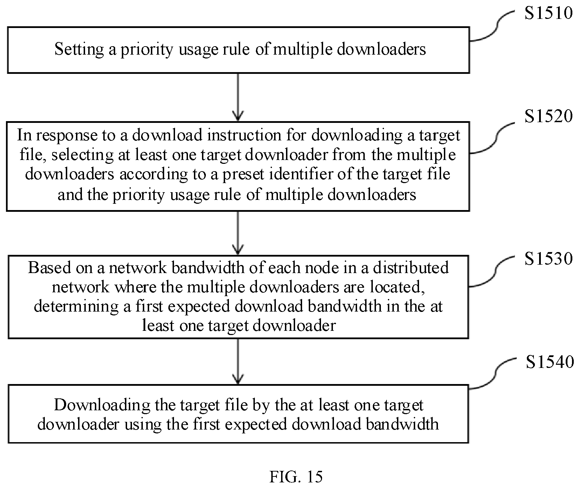

FIG. 15 is a further flow diagram of a data processing method provided by an embodiment of the present application. This data processing method can be performed by a data processing apparatus provided by an embodiment of the present application, the data processing apparatus can be implemented in software and/or hardware. The data processing method provided by the embodiment includes the followings steps.

Step S1510: setting a priority usage rule of multiple downloaders.

In one implementation, the multiple downloaders include a first downloader, a second downloader and a third downloader; setting the priority usage rule of the multiple downloaders include:
a first priority usage rule: using the first downloader; a second priority usage rule: using both the second downloader and the third downloader simultaneously; a third priority usage rule: only using the second downloader; and a fourth priority usage rule: only using the third downloader.

Preferably, the first downloader includes a telematics box (Telematics BOX, Tbox) downloader, the second downloader includes a cockpit domain controller (Cockpit Domain Controller, CDC) downloader, and the third downloader includes the driving domain centers (Driving Domain Centers, DDC) downloader.

Step S1520, in response to a download instruction for downloading a target file, selecting at least one target downloader from the multiple downloaders according to a preset identifier of the target file and the priority usage rule of multiple downloaders.

Step S1530: based on a network bandwidth of each node in a distributed network where the multiple downloaders are located, determining an expected download bandwidth in the at least one target downloader.

In one implementation, the determining the expected download bandwidth in the at least one target downloader includes:
determining a communication network bandwidth for a communication network in an in-vehicle network accessed by a vehicle, a first Ethernet bandwidth for an Ethernet between the first downloader and a gateway, a second Ethernet bandwidth for the Ethernet between the gateway and the second downloader, and a third Ethernet bandwidth for the Ethernet between the gateway and the third downloader; when the first downloader is selected as the target downloader, determining the communication network bandwidth as a first expected download bandwidth; when the second downloader is selected as the target downloader, determining the smallest of the communication network bandwidth, the first Ethernet bandwidth, and the second Ethernet bandwidth as a second expected download bandwidth; and when the third downloader is selected as the target downloader, determining the smallest of the communication network bandwidth, the first Ethernet bandwidth, and the third Ethernet bandwidth as a third expected download bandwidth; where the first downloader includes a telematics box downloader, the second downloader includes a cockpit domain controller downloader, and the third downloader includes a driving domain centers downloader.

Preferably, 5G networks are the basic configuration for current networked vehicles. In-vehicle Ethernet mainly includes Gigabit Ethernet, which serves as the backbone network between the telematics box and the gateway, as well as between the gateway and the core domain controller (cockpit domain controller, driving domain centers).

It can be understood that the first downloader is connected to the second downloader and the third downloader through the gateway. Where the first downloader is located in an upper network of the gateway, the second downloader and the third downloader are located in a lower network of the gateway, and the second downloader and the third downloader share the lower network. Therefore, a total quantity allocated to the second downloader and the third downloader should not exceed a smaller value between the communication network bandwidth and the first Ethernet bandwidth.

Step S1540: downloading the target file by the at least one target downloader using the expected download bandwidth.

In one implementation, the downloading the target file by the at least one target downloader using the expected download bandwidth includes:
if the target file is able to be downloaded using the first downloader, selecting the first downloader to download the target file using the first expected download bandwidth; and if the target file is unable to be downloaded using the first downloader but is able to be downloaded using the second downloader and the third downloader, and the third Ethernet bandwidth is determined as the third expected download bandwidth, determining a difference value between a smaller one of the communication network bandwidth and the first Ethernet bandwidth with the second expected download bandwidth as an auxiliary download bandwidth; selecting the second downloader to download the target file using the second expected download bandwidth, and at the same time, selecting the third downloader to download the target file using the auxiliary download bandwidth.

Furthermore, if the target file is unable to be downloaded using the first downloader and the third downloader but is able to be downloaded using the second downloader, or if the target file is unable to be downloaded using the first downloader but is able to be downloaded using the second downloader and the third downloader, and either the communication network bandwidth or the first Ethernet bandwidth is determined as the third expected download bandwidth, the second downloader is selected to download the target file using the second expected download bandwidth; and if the target file is unable to be downloaded using the first downloader and the second downloader but is able to be downloaded using the third downloader, the third downloader is selected to download the target file using the third expected download bandwidth.

In one implementation, after determining the expected download bandwidth in at least one target downloader, the method further includes:
periodically determining the first expected download bandwidth, the second expected download bandwidth, the third expected download bandwidth, and a download rate of the target file according to a preset time period; or, dynamically determining the first expected download bandwidth, the second expected download bandwidth, the third expected download bandwidth, and the download rate of the target file according to a current connection state of the in-vehicle network.

In one implementation, after the downloading the target file by the at least one target downloader using the expected download bandwidth, the method further includes:
if a connection of the in-vehicle network is disconnected, controlling the multiple downloaders to suspend a download work; and if the connection of the in-vehicle network is restored, determining an updated expected download bandwidth of the at least one target downloader, and downloading the target file by the target downloader using the updated expected download bandwidth.

It can be understood that when the target file is unable to be downloaded using the first downloader but is able to be downloaded using the second downloader and the third downloader, the second expected download bandwidth is determined. If the second expected download bandwidth is a smaller value between the communication network bandwidth and the first Ethernet bandwidth, it indicates that there is no extra bandwidth allocated to the third downloader, and all available bandwidth will be allocated to the second downloader. If the second expected download bandwidth is the second Ethernet bandwidth, it indicates that there is extra bandwidth allocated to the third downloader. After allocating the available bandwidth that meets the second Ethernet bandwidth to the second downloader, the remaining bandwidth is allocated to the third downloader.

It can be understood that the present invention can also periodically detect the first expected download bandwidth, the second expected download bandwidth, and the third expected download bandwidth, dynamically adjust the state of each downloader, and determine the download rate of the target file, and can also adjust the state of each downloader and the download rate in real time according to network connection state change events and downloader state change events.

Preferably, the time period is 10 seconds.

Through the above methods, during the download process, according to the network load state, the state of the downloader, periodic or real-time control can be adopted to determine whether each downloader is performing the download. According to the preset priority usage rule, available bandwidth can be allocated to each downloader, and the download bandwidth of the downloader can be adjusted in real time.

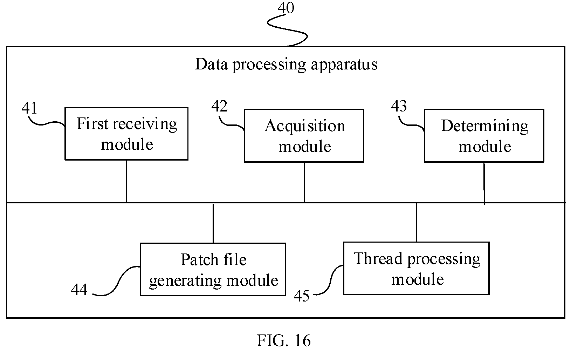

FIG. 16 is a structural schematic diagram of an embodiment of a data processing apparatus of a data processing method provided by the present application. An apparatus 40 can be integrated into the server in the method embodiment, or can be implemented through the server in the method embodiment. As shown in FIG. 16, the data processing apparatus 40 includes a first receiving module 41, an acquisition module 42, a determining module 43 and a patch file generating module 44.

The first receiving module 41 is configured to receive a first file update request from a first device, where the first file update request includes first new file data of a first target application.

The acquisition module 42 is configured to acquire first old file data corresponding to the first new file data, and a first data string set, where the first data string set is a set of data strings of different lengths created based on the first old file data.

The determining module 43 is configured to determine a retained data set and a newly added data set of the first new file data compared to the first old file data according to the first data string set and a preset data string length threshold, where the retained data set includes at least one piece of retained data, the newly added data set includes at least one piece of newly added data, a data length of each piece of retained data is greater than the data string length threshold.

The patch file generating module 44 is configured to generate a patch file of the first new file data according to a data length of the at least one piece of retained data, position information of the at least one piece of newly added data in the first new file data, and position information of the at least one piece of retained data in the first new file data and the first old file data respectively, where the patch file is used to perform data update for the first target application.

In some embodiments, the determining module 43 is further configured to, starting from a first byte of the first new file data, search for a longest data string beginning with the first byte in the first data string set; determine whether to treat the longest data string as one piece of retained data by comparing a size relationship between a length of the longest data string and the data string length threshold; obtain the retained data set after traversing all bytes of the first new file data; and determine the newly added data set according to a position of the retained data in the retained data set in the first new file data.

In some embodiments, the determining module 43 is further configured to, if the length of the longest data string is greater than the data string length threshold, determine to treat the longest data string as one piece of retained data, and starting from a target byte of the first new file data, search for whether there is a longest data string beginning with the target byte in the first data string set, where the target byte is a byte determined by adding a length of the longest data string beginning with the first byte to the first byte; and if the length of the longest data string is less than or equal to the data string length threshold, starting from a next byte of the first byte, continue to search for whether there is a longest data string beginning with the next byte in the first data string set.

In some embodiments, the data processing apparatus 40 further includes a thread processing module 45. The thread processing module 45 is configured to perform data splitting for the first new file data and the first old file data respectively according to a preset data volume threshold to obtain N pairs of new-old file data blocks, where N is a positive integer greater than 1 and less than or equal to M, and M is a maximum value of processing threads executed in parallel; create N first processing threads, where the N first processing threads correspond one-to-one with the N pairs of new-old file data blocks; execute data comparison on the N pairs of new-old file data blocks in parallel by the N first processing threads to obtain patch files of the N pairs of new-old file data blocks; and generate the patch file of the first new file data according to the patch files of the N pairs of new-old file data blocks.

In some embodiments, the thread processing module 45 is further configured to initialize a preset parameter by calling a preset algorithm library through a first application thread of the first target application, where the preset parameter includes the data volume threshold and M; and create a first management thread by the first application thread according to the first file update request; and execute, by the first management thread, the step of performing data splitting for the first new file data and the first old file data respectively according to the preset data volume threshold to obtain the N pairs of new-old file data blocks; and execute, by the first management thread, the step of generating the patch file of the first new file data according to the patch files of the N pairs of new-old file data blocks.

In some embodiments, the thread processing module 45 is further configured to, the first application thread is further used to write information of the N first processing threads corresponding to the first file update request in a first storage space; the first management thread is further used to delete the information of the N first processing threads after generating the patch file of the first new file data; when the first application thread writes data in the first storage space, the first management thread is prohibited from deleting data in the first storage space.

In some embodiments, the thread processing module 45 is further configured to, the first processing thread is used to write a processing state and/or a processing progress of the first processing thread in a second storage space, and the first management thread is used to read the processing state and/or the processing progress of the first processing thread from the second storage space; when the first processing thread writes data in the second storage space, the first management thread is prohibited from reading data in the second storage space.

In some embodiments, the thread processing module 45 is further configured to create two first management threads by the first application; and when one first management thread of the two first management threads reads the first old file data, prohibit the other first management thread of the two first management threads from reading the first old file data.

In some embodiments, the thread processing module 45 is further configured to receive a second file update request from the first device while receiving the first file update request, where the second file update request includes a third new file data of a second target application; create a second application thread of the second target application according to the second file update request, where the second application thread is used to initialize the preset parameter by calling the preset algorithm library; create a second management thread by the second application thread; and when the first application thread calls the preset algorithm library, prohibit the second application thread from calling the preset algorithm library.

In some embodiments, the first receiving module 41 is further configured to receive an upgrade request from a second device, where the upgrade request is used to request an upgrade for the first target application; in response to the upgrade request, acquire a patch file of the first target application; and send an upgrade response to the second device, where the upgrade response includes the patch file of the first target application.

The data processing apparatus 40 provided by the embodiment is configured to perform the technical solution in the method embodiment executed by the server. Its implementation principle and technical effect are similar and will not be repeated here.

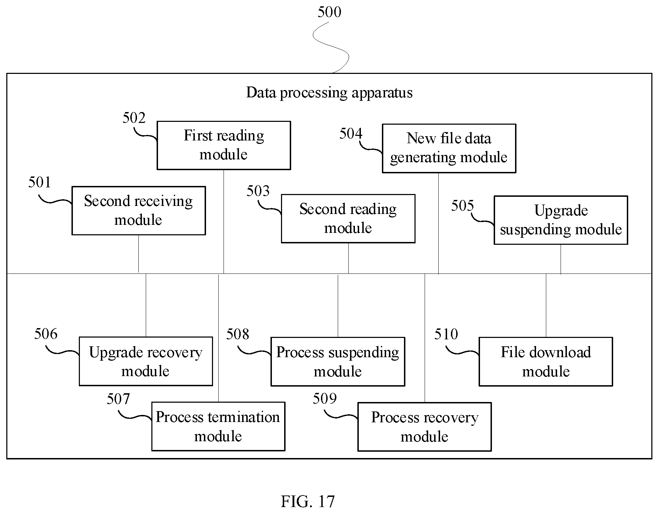

FIG. 17 is a structural schematic diagram of another embodiment of a data processing apparatus of a data processing method provided by the present application. The apparatus 50 can be integrated into the terminal device in the embodiments of the above-mentioned method, or can be realized through the terminal device in the embodiments of the above-mentioned method. As shown in FIG. 17, the data processing apparatus 500 includes a second receiving module 501, a first reading module 502, a second reading module 503 and a new file data generating module 504.

The second receiving module 501 is configured to receive an upgrade response from a server, where the upgrade response includes a patch file of a first target application.

The first reading module 502 is configured to read at least one piece of retained data from first old file data according to position information of the at least one piece of retained data of a patch file in the first old file data and a data length of the at least one piece of retained data.

The second reading module 503 is configured to read newly added data of the same length as the interval length and position information of the at least one piece of retained data in first new file data from the patch file according to an interval length between adjacent retained data in the at least one piece of retained data.

The new file data generating module 504 is configured to generate the first new file data of the first target application according to the newly added data, the position information of the at least one piece of retained data in the first new file data, and the at least one piece of retained data block.

In one possible implementation, the data processing apparatus 500 further includes: an upgrade suspending module 505.

The upgrade suspend module 505 is configured, in response to receiving an upgrade task, create at least one upgrade process corresponding to the upgrade task, where the upgrade process corresponds to a firmware to be upgraded; acquire occupancy of at least one type of resource of the firmware to be upgraded and a first threshold corresponding to the at least one type of resource; and suspend the upgrade process corresponding to the firmware to be upgraded if the occupancy of the at least one type of resource is greater than the corresponding first threshold.

In one possible implementation, the data processing apparatus 500 further includes: an upgrade recovery module 506.

The upgrade recovery module 506 is configured to continue the upgrade process corresponding to the firmware to be upgraded if occupancy of all types of resources of the firmware to be upgraded is less than a corresponding second threshold.

In one possible implementation, the data processing apparatus 500 further includes: a process termination module 507.

The process termination module 507 is configured to acquire a first process running in the firmware to be upgraded if the occupancy of the at least one type of resource of the firmware to be upgraded is greater than the corresponding first threshold; determine a priority of each first process; determine a process to be terminated according to the priority of each first process; and terminate the process to be terminated.

In one possible implementation, the process termination module 507 is specifically configured to acquire final response time of each first process, current time and a preset priority score corresponding to each first process; calculate a time difference between final response time corresponding to a target first process and the current time, where the target first process is any first process; determine a minimum value and a maximum value of the preset priority score corresponding to each first process as input parameters; write the input parameters into a preset formula template to obtain a priority calculation formula; and input the preset priority score corresponding to the target first process and the time difference into the priority calculation formula to obtain a priority corresponding to the target first process.

In one possible implementation, the data processing apparatus 500 further includes: a process suspending module 508.

The process suspending module 508 is configured to acquire a second process running in the firmware to be upgraded; and if the second process corresponding to the firmware to be upgraded includes a target process corresponding to the firmware to be upgraded, suspend the upgrade process corresponding to the firmware to be upgraded.

In one possible implementation, the data processing apparatus 500 further includes: a process recovery module 509.

The process recovery module 509 is configured to, if the target process is in a stopped state, continue the upgrade process corresponding to the firmware to be upgraded.

In one possible implementation, the process suspending module 508 is further configured to acquire running applications; if the running applications include a target application, determine a firmware to be suspended corresponding to the target application; and suspend an upgrade process corresponding to the firmware to be suspended.

In one possible implementation, the data processing apparatus 500 further includes: a file download module 510.

The file download module 510 is configured to set a priority usage rule of multiple downloaders; in response to a download instruction for downloading a target file, select at least one target downloader from the multiple downloaders according to a preset identifier of the target file and the priority usage rule of multiple downloaders; based on a network bandwidth of each node in a distributed network where the multiple downloaders are located, determine an expected download bandwidth in the at least one target downloader; and download the target file by the at least one target downloader using the expected download bandwidth.

In one possible implementation, the multiple downloaders include a first downloader, a second downloader and a third downloader; setting the priority usage rule of the multiple downloaders include: a first priority usage rule: using the first downloader; a second priority usage rule: using both the second downloader and the third downloader simultaneously; a third priority usage rule: only using the second downloader; and a fourth priority usage rule: only using the third downloader.

In one possible implementation, the file download module 510 is specifically configured to determine a communication network bandwidth for a communication network in an in-vehicle network accessed by a vehicle, a first Ethernet bandwidth for an Ethernet between the first downloader and a gateway, a second Ethernet bandwidth for the Ethernet between the gateway and the second downloader, and a third Ethernet bandwidth for the Ethernet between the gateway and the third downloader; when the first downloader is selected as the target downloader, determine the communication network bandwidth as a first expected download bandwidth; when the second downloader is selected as the target downloader, determine the smallest of the communication network bandwidth, the first Ethernet bandwidth, and the second Ethernet bandwidth as a second expected download bandwidth; and when the third downloader is selected as the target downloader, determine the smallest of the communication network bandwidth, the first Ethernet bandwidth, and the third Ethernet bandwidth as a third expected download bandwidth; where the first downloader includes a telematics box downloader, the second downloader includes a cockpit domain controller downloader, and the third downloader includes a driving domain centers downloader.

In one possible implementation, the file download module 510 is specifically configured to, if the target file is able to be downloaded using the first downloader, determine the first downloader as the target downloader and downloading the target file using the first expected download bandwidth; and if the target file is unable to be downloaded using the first downloader but is able to be downloaded using the second downloader and the third downloader, and the third Ethernet bandwidth is determined as the third expected download bandwidth, determine the second downloader and the third downloader as the target downloader, determine a difference value between a smaller one of the communication network bandwidth and the first Ethernet bandwidth with the second expected download bandwidth as an auxiliary download bandwidth; select the second downloader to download the target file using the second expected download bandwidth, and at the same time, select the third downloader to download the target file using the auxiliary download bandwidth.

In one possible implementation, the file download module 510 is further configured to, if the target file is unable to be downloaded using the first downloader and the third downloader but is able to be downloaded using the second downloader, or if the target file is unable to be downloaded using the first downloader but is able to be downloaded using the second downloader and the third downloader, and either the communication network bandwidth or the first Ethernet bandwidth is determined as the third expected download bandwidth, determine the second downloader as the target downloader, and download the target file using the second expected download bandwidth.

In one possible implementation, the file download module 510 is further configured to, if the target file is unable to be downloaded using the first downloader and the second downloader but is able to be downloaded using the third downloader, determine the third downloader as the target downloader, and download the target file using the third expected download bandwidth.

In one possible implementation, the file download module 510 is further configured to periodically determine the first expected download bandwidth, the second expected download bandwidth, the third expected download bandwidth, and a download rate of the target file according to a preset time period; or, dynamically determine the first expected download bandwidth, the second expected download bandwidth, the third expected download bandwidth, and the download rate of the target file according to a current connection state of the in-vehicle network.

In one possible implementation, the file download module 510 is further configured to, if a connection of the in-vehicle network is disconnected, control the multiple downloaders to suspend a download work; and if the connection of the in-vehicle network is restored, determine an updated expected download bandwidth of the at least one target downloader, and download the target file by the target downloader using the updated expected download bandwidth.

The apparatus provided by the embodiment can be used to perform the technical solution of the method embodiment. Its implementation principle and technical effect are similar, and this embodiment will not be repeated here.

The present application further provides a computer-readable storage medium the computer-readable storage medium stores computer execution instructions, when a processor executes the computer execution instructions, a technical solution of the data processing method in any of the above embodiments is implemented. An implementation principle and beneficial effects are similar to those of the data processing method, and can be referred to the implementation principle and beneficial effects of the data processing method, which will not be repeated here.

In the context of the present application, a machine-readable medium may be tangible medium that may contain or store programs for use by an instruction execution system, apparatus or device or for use in conjunction with an instruction execution system, apparatus or device. The machine-readable medium can be a machine-readable signal medium or machine-readable storage medium. The machine-readable medium may include, but are not limited to, electronic, magnetic, optical, electromagnetic, infrared, or semiconductor system, apparatus or device, or any appropriate combination of the above. More specific examples of the machine-readable storage medium would include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), and optical storage devices, magnetic storage devices, or any appropriate combination of the above contents.

The present application further provides a computer program product, including a computer program, when the computer program is executed by a processor, a technical solution of the data processing method in any of the above embodiments is implemented. An implementation principle and beneficial effects are similar to those of the data processing method, and can be referred to the implementation principle and beneficial effects of the data processing method, which will not be repeated here.

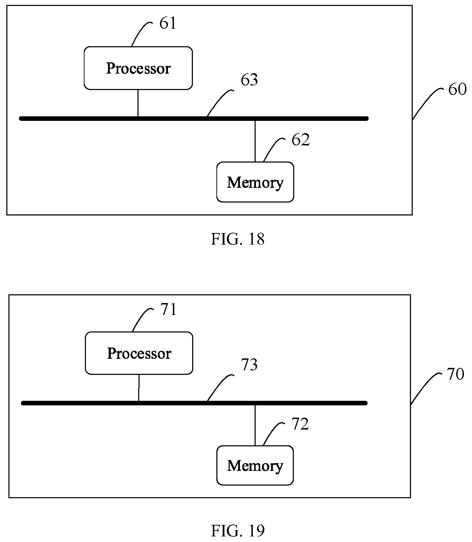

FIG. 18 is a structural schematic diagram of a server provided by the present application. As shown in FIG. 18, a server 60 includes: a processor 61, a memory 62 and a bus 63; the memory 62 is configured to store computer program codes of the processor 61; where the processor 61 is configured to execute a technical solution of the server in any of the method embodiments by executing the computer program codes. Optionally, the memory 62 can be either independent or integrated with the processor 61. The memory 62 is connected to the processor 61 through the bus 63 and communicates with each other. Optionally, the memory 62 may contain random access memory (random access memory, RAM), and may also include non-volatile memory (non-volatile memory), such as at least one disk memory. The bus 63 can be a peripheral component interconnect (peripheral component interconnect, PCI) bus or an extended industry standard architecture (extended industry standard architecture, EISA) bus, etc. Buses can be classified into address buses, data buses, control buses, etc. For ease of representation, only one thick line is used in the figure, but this does not mean there is only one bus or one type of bus.

The above-mentioned processor can be a general-purpose processor, including a central processing unit CPU, a network processor (network processor, NP), etc. It can also be a digital signal processor DSP, an application-specific integrated circuit ASIC, a field programmable gate array FPGA, or other programmable logic device, discrete gate or transistor logic device, or discrete hardware component.

This server is used to implement the technical solution of the server in any of the method embodiments. Its implementation principle and technical effect are similar and will not be repeated here.

FIG. 19 is a structural schematic diagram of a terminal device provided by the present application. As shown in FIG. 19, a terminal device 70 includes: a processor 71, a memory 72 and a bus 73; the memory 72 is used to store computer program codes of the processor 71; where the processor 71 is configured to execute a technical solution of the server in any of the method embodiments by executing the computer program codes. Optionally, the memory 72 can be either independent or integrated with processor 71. The memory 72 is connected to the processor 71 through the bus 73 and communicates with each other. Optionally, the memory 72 may contain random access memory (random access memory, RAM), and may also include non-volatile memory (non-volatile memory), such as at least one disk memory. The bus 73 can be a peripheral component interconnect (peripheral component interconnect, PCI) bus or an extended industry standard architecture (extended industry standard architecture, EISA) bus, etc. Buses can be classified into address buses, data buses, control buses, etc. For ease of representation, only one thick line is used in the figure, but this does not mean there is only one bus or one type of bus.

The above-mentioned processor can be a general-purpose processor, including a central processing unit CPU, a network processor (network processor, NP), etc. It can also be a digital signal processor DSP, an application-specific integrated circuit ASIC, a field programmable gate array FPGA, or other programmable logic device, discrete gate or transistor logic device, or discrete hardware component.

This terminal device is used to implement the technical solution of the terminal device in any of the method embodiments. Its implementation principle and technical effect are similar and will not be repeated here.

An embodiment of the present application further provides a readable storage medium on which a computer program is stored. When the computer program is executed by a processor, the technical solution provided in any of the embodiments is implemented.

An embodiment of the present application further provides a chip system, the chip system is applied to a server or a terminal device. The chip system includes one or more processors, and one or more processors are used to call computer instructions to enable the server or the terminal device to implement the technical solution provided in any of the embodiments.

An embodiment of the present application further provides a computer program product, including a computer program, when the computer program is executed by a processor, the technical solution provided by the embodiments of any of the methods is implemented.

It can be understood by those skilled in the art that implementing all or part of the steps of above-mentioned each method embodiment can be accomplished through hardware related to program instructions. The program can be stored in a computer-readable storage medium. When this program is executed, steps including the above-mentioned each method embodiments are carried out. The storage medium includes various types of mediums that can store program codes, such as ROM, RAM, disk or optical disc.

Finally, it should be noted that the above embodiments are only used to illustrate the technical solution of the present application and do not limit it. Although the present application has been described in detail with reference to the embodiments, it should be understood by those skilled in the art that the technical solution recorded in the embodiments can still be modified, or some or all of the technical features can be replaced equivalently. And these modifications or substitutions do not deviate the essence of the corresponding technical solutions from the scope of the technical solution of each embodiment of the present application.

## Claims

1. A data processing method, applied to a server and comprising:
receiving a first file update request from a first device, wherein the first file update request comprises first new file data of a first target application;
acquiring first old file data corresponding to the first new file data, and a first data string set, wherein the first data string set is a set of data strings of different lengths created based on the first old file data and the first new file data;
determining a retained data set and a newly added data set of the first new file data compared to the first old file data according to the first data string set and a preset data string length threshold, wherein the retained data set comprises at least one piece of retained data, the newly added data set comprises at least one piece of newly added data, a data length of each piece of retained data is greater than the data string length threshold; and
generating a patch file of the first new file data according to a data length of the at least one piece of retained data, position information of the at least one piece of newly added data in the first new file data, and position information of the at least one piece of retained data in the first new file data and the first old file data respectively, wherein the patch file is used to perform data update for the first target application.

2. The method according to claim 1, wherein the determining the retained data set and the newly added data set of the first new file data compared to the first old file data according to the first data string set and the preset data string length threshold comprises:
starting from a first byte of the first new file data, searching for a longest data string beginning with the first byte in the first data string set;
determining whether to treat the longest data string as one piece of retained data by comparing a size relationship between a length of the longest data string and the data string length threshold;
obtaining the retained data set after traversing all bytes of the first new file data; and
determining the newly added data set according to a position of the retained data in the retained data set in the first new file data.

3. The method according to claim 2, wherein the determining whether to treat the longest data string as one piece of retained data by comparing the size relationship between the length of the longest data string and the data string length threshold comprises:
if the length of the longest data string is greater than the data string length threshold, determining to treat the longest data string as one piece of retained data, and starting from a target byte of the first new file data, searching for whether there is a longest data string beginning with the target byte in the first data string set, wherein the target byte is a byte determined by adding a length of the longest data string beginning with the first byte to the first byte; and
if the length of the longest data string is less than or equal to the data string length threshold, starting from a next byte of the first byte, continuing to search for whether there is a longest data string beginning with the next byte in the first data string set.

4. The method according to any one of claims 1 to 3, wherein the method further comprises:
performing data splitting for the first new file data and the first old file data respectively according to a preset data volume threshold to obtain N pairs of new-old file data blocks, wherein N is a positive integer greater than 1 and less than or equal to M, and M is a maximum value of processing threads executed in parallel;
creating N first processing threads, wherein the N first processing threads correspond one-to-one with the N pairs of new-old file data blocks;
executing data comparison on the N pairs of new-old file data blocks in parallel by the N first processing threads to obtain patch files of the N pairs of new-old file data blocks; and
generating the patch file of the first new file data according to the patch files of the N pairs of new-old file data blocks.

5. The method according to claim 4, wherein the method further comprises:
initializing a preset parameter by calling a preset algorithm library through a first application thread of the first target application, wherein the preset parameter comprises the data volume threshold and M; and
creating a first management thread by the first application thread according to the first file update request;
the performing data splitting for the first new file data and the first old file data respectively according to the preset data volume threshold to obtain the N pairs of new-old file data blocks comprises:
executing, by the first management thread, the step of performing data splitting for the first new file data and the first old file data respectively according to the preset data volume threshold to obtain the N pairs of new-old file data blocks;
the creating the N first processing threads comprises:
creating the N first processing threads by the first management thread; and
the generating the patch file of the new file data according to the patch files of the N pairs of new-old file data blocks comprises: executing, by the first management thread, the step of generating the patch file of the first new file data according to the patch files of the N pairs of new-old file data blocks.

6. The method according to claim 5, wherein the first application thread is further used to write information of the N first processing threads corresponding to the first file update request in a first storage space; the first management thread is further used to delete the information of the N first processing threads after generating the patch file of the first new file data;
when the first application thread writes data in the first storage space, the first management thread is prohibited from deleting data in the first storage space.

7. The method according to claim 5, wherein the first processing thread is used to write a processing state and/or a processing progress of the first processing thread in a second storage space, and the first management thread is used to read the processing state and/or the processing progress of the first processing thread from the second storage space;
when the first processing thread writes data in the second storage space, the first management thread is prohibited from reading data in the second storage space.

8. The method according to claim 5, wherein if the first file update request comprises the first new file data and second new file data of the first target application, both the first new file data and the second new file data correspond to the first old file data;
the creating the first management thread by the first application thread comprises:
creating two first management threads by the first application; and
when one first management thread of the two first management threads reads the first old file data, prohibiting the other first management thread of the two first management threads from reading the first old file data.

9. The method according to claim 5, wherein the method further comprises:
receiving a second file update request from the first device while receiving the first file update request, wherein the second file update request comprises a third new file data of a second target application;
creating a second application thread of the second target application according to the second file update request, wherein the second application thread is used to initialize the preset parameter by calling the preset algorithm library;
creating a second management thread by the second application thread; and
when the first application thread calls the preset algorithm library, prohibiting the second application thread from calling the preset algorithm library.

10. The method according to any one of claims 1 to 9, wherein the method further comprises:
receiving an upgrade request from a second device, wherein the upgrade request is used to request an upgrade for the first target application;
in response to the upgrade request, acquiring a patch file of the first target application; and
sending an upgrade response to the second device, wherein the upgrade response comprises the patch file of the first target application.

11. A data processing method, applied to a terminal device and comprising:
receiving an upgrade response from a server, wherein the upgrade response comprises a patch file of a first target application;
reading at least one piece of retained data from first old file data according to position information of the at least one piece of retained data of a patch file in the first old file data and a data length of the at least one piece of retained data;
reading newly added data of the same length as the interval length and position information of the at least one piece of retained data in first new file data from the patch file according to an interval length between adjacent retained data in the at least one piece of retained data; and
generating the first new file data of the first target application according to the newly added data, the position information of the at least one piece of retained data in the first new file data, and the at least one piece of retained data block.

12. The method according to claim 11, wherein after the receiving the upgrade response from the server, the method further comprises:
in response to receiving an upgrade task, creating at least one upgrade process corresponding to the upgrade task, wherein the upgrade process corresponds to a firmware to be upgraded;
acquiring occupancy of at least one type of resource of the firmware to be upgraded and a first threshold corresponding to the at least one type of resource; and
suspending the upgrade process corresponding to the firmware to be upgraded if the occupancy of the at least one type of resource is greater than the corresponding first threshold.

13. The method according to claim 12, wherein after the suspending the upgrade process corresponding to the firmware to be upgraded if the occupancy of the at least one type of resource is greater than the corresponding first threshold, the method further comprises:
continuing the upgrade process corresponding to the firmware to be upgraded if occupancy of all types of resources of the firmware to be upgraded is less than a corresponding second threshold.

14. The method according to claim 12, wherein after the acquiring the occupancy of the at least one type of resource of the firmware to be upgraded and the first threshold corresponding to the at least one type of resource, the method further comprises:
acquiring a first process running in the firmware to be upgraded if the occupancy of the at least one type of resource of the firmware to be upgraded is greater than the corresponding first threshold;
determining a priority of each first process;
determining a process to be terminated according to the priority of each first process; and
terminating the process to be terminated.

15. The method according to claim 14, wherein the determining the priority of each first process comprises:
acquiring final response time of each first process, current time and a preset priority score corresponding to each first process;
calculating a time difference between final response time corresponding to a target first process and the current time, wherein the target first process is any first process;
determining a minimum value and a maximum value of the preset priority score corresponding to each first process as input parameters;
writing the input parameters into a preset formula template to obtain a priority calculation formula; and
inputting the preset priority score corresponding to the target first process and the time difference into the priority calculation formula to obtain a priority corresponding to the target first process.

16. The method according to any one of claims 12 to 15, wherein after the in response to receiving the upgrade task, creating the at least one upgrade process corresponding to the upgrade task, the method further comprises:
acquiring a second process running in the firmware to be upgraded; and
if the second process corresponding to the firmware to be upgraded comprises a target process corresponding to the firmware to be upgraded, suspending the upgrade process corresponding to the firmware to be upgraded.

17. The method according to claim 16, wherein after the suspending the upgrade process corresponding to the firmware to be upgraded, the method further comprises:
if the target process is in a stopped state, continuing the upgrade process corresponding to the firmware to be upgraded.

18. The method according to any one of claims 12 to 15, wherein after the in response to receiving the upgrade task, creating the at least one upgrade process corresponding to the upgrade task, the method further comprises:
acquiring running applications;
if the running applications comprise a target application, determining a firmware to be suspended corresponding to the target application; and
suspending an upgrade process corresponding to the firmware to be suspended.

19. The method according to any one of claims 11 to 18, wherein after the receiving the upgrade response from the server, the method further comprises: setting a priority usage rule of multiple downloaders;
in response to a download instruction for downloading a target file, selecting at least one target downloader from the multiple downloaders according to a preset identifier of the target file and the priority usage rule of multiple downloaders;
based on a network bandwidth of each node in a distributed network where the multiple downloaders are located, determining an expected download bandwidth in the at least one target downloader; and
downloading the target file by the at least one target downloader using the expected download bandwidth.

20. The method according to claim 19, wherein the multiple downloaders comprise a first downloader, a second downloader and a third downloader;
setting the priority usage rule of the multiple downloaders comprises:
a first priority usage rule: using the first downloader; a second priority usage rule: using both the second downloader and the third downloader simultaneously; a third priority usage rule: only using the second downloader; and a fourth priority usage rule: only using the third downloader.

21. The method according to claim 20, wherein the determining the expected download bandwidth in the at least one target downloader comprises:
determining a communication network bandwidth for a communication network in an in-vehicle network accessed by a vehicle, a first Ethernet bandwidth for an Ethernet between the first downloader and a gateway, a second Ethernet bandwidth for the Ethernet between the gateway and the second downloader, and a third Ethernet bandwidth for the Ethernet between the gateway and the third downloader;
when the first downloader is selected as the target downloader, determining the communication network bandwidth as a first expected download bandwidth;
when the second downloader is selected as the target downloader, determining the smallest of the communication network bandwidth, the first Ethernet bandwidth, and the second Ethernet bandwidth as a second expected download bandwidth; and
when the third downloader is selected as the target downloader, determining the smallest of the communication network bandwidth, the first Ethernet bandwidth, and the third Ethernet bandwidth as a third expected download bandwidth;
wherein the first downloader comprises a telematics box downloader, the second downloader comprises a cockpit domain controller downloader, and the third downloader comprises a driving domain centers downloader.

22. The method according to claim 21, wherein the downloading the target file by the at least one target downloader using the expected download bandwidth comprises:
if the target file is able to be downloaded using the first downloader, determining the first downloader as the target downloader and downloading the target file using the first expected download bandwidth; and
if the target file is unable to be downloaded using the first downloader but is able to be downloaded using the second downloader and the third downloader, and the third Ethernet bandwidth is determined as the third expected download bandwidth, determining the second downloader and the third downloader as the target downloader, determining a difference value between a smaller one of the communication network bandwidth and the first Ethernet bandwidth with the second expected download bandwidth as an auxiliary download bandwidth; selecting the second downloader to download the target file using the second expected download bandwidth, and at the same time, selecting the third downloader to download the target file using the auxiliary download bandwidth.

23. The method according to claim 21, wherein the downloading the target file by the at least one target downloader using the expected download bandwidth further comprises:
if the target file is unable to be downloaded using the first downloader and the third downloader but is able to be downloaded using the second downloader, or if the target file is unable to be downloaded using the first downloader but is able to be downloaded using the second downloader and the third downloader, and either the communication network bandwidth or the first Ethernet bandwidth is determined as the third expected download bandwidth, determining the second downloader as the target downloader, and downloading the target file using the second expected download bandwidth.

24. The method according to claim 21, wherein the downloading the target file by the at least one target downloader using the expected download bandwidth further comprises:
if the target file is unable to be downloaded using the first downloader and the second downloader but is able to be downloaded using the third downloader, determining the third downloader as the target downloader, and downloading the target file using the third expected download bandwidth.

25. The method according to any one of claims 22 to 24, wherein the downloading the target file by the at least one target downloader using the expected download bandwidth further comprises:
periodically determining the first expected download bandwidth, the second expected download bandwidth, the third expected download bandwidth, and a download rate of the target file according to a preset time period;
or, dynamically determining the first expected download bandwidth, the second expected download bandwidth, the third expected download bandwidth, and the download rate of the target file according to a current connection state of the in-vehicle network.

26. The method according to claim 25, wherein after the downloading the target file by the at least one target downloader using the expected download bandwidth, the method further comprises:
if a connection of the in-vehicle network is disconnected, controlling the multiple downloaders to suspend a download work; and
if the connection of the in-vehicle network is restored, determining an updated expected download bandwidth of the at least one target downloader, and downloading the target file by the target downloader using the updated expected download bandwidth.

27. A data processing apparatus, applied to a server and comprising:
a request receiving module, configured to receive a first file update request from a first device, wherein the first file update request comprises first new file data of a first target application;
a data acquisition module, configured to acquire first old file data corresponding to the first new file data, and a first data string set, wherein the first data string set is a set of data strings of different lengths created based on the first old file data and the first new file data;
a data determining module, configured to determine a retained data set and a newly added data set of the first new file data compared to the first old file data according to the first data string set and a preset data string length threshold, wherein the retained data set comprises at least one piece of retained data, the newly added data set comprises at least one piece of newly added data, a data length of each piece of retained data is greater than the data string length threshold; and
a file generating module, configured to generate a patch file of the first new file data according to a data length of the at least one piece of retained data, position information of the at least one piece of newly added data in the first new file data, and position information of the at least one piece of retained data in the first new file data and the first old file data respectively, wherein the patch file is used to perform data update for the first target application.

28. A data processing apparatus, applied to a terminal device and comprising:
a response receiving module, configured to receive an upgrade response from a server, wherein the upgrade response comprises a patch file of a first target application;
a retained data reading module, configured to read at least one piece of retained data from first old file data according to position information of the at least one piece of retained data of a patch file in the first old file data and a data length of the at least one piece of retained data;
a newly added data reading module, configured to read newly added data of the same length as the interval length and position information of the at least one piece of retained data in first new file data from the patch file according to an interval length between adjacent retained data in the at least one piece of retained data; and
a file data generating module, configured to generate the first new file data of the first target application according to the newly added data, the position information of the at least one piece of retained data in the first new file data, and the at least one piece of retained data block.

29. A server, comprising: a processor and a memory;
wherein the memory is coupled with the processor, the memory is configured to store computer program codes, and the processor calls the computer program codes to enable the server to execute the method according to any one of claims 1 to 10.

30. A terminal device, comprising: a processor and a memory;
wherein the memory is coupled with the processor, the memory is configured to store computer program codes, and the processor calls the computer program codes to enable the terminal device to execute the method according to any one of claims 11 to 26.

31. A computer-readable storage medium, wherein the computer-readable storage medium stores computer execution instructions, when the computer execution instructions are executed by a processor, the computer execution instructions are used to implement the data processing method according to any one of claims 1 to 10 or claims 11 to 26.
